# EUROPÄISCHE PATENTANMELDUNG

(11) **EP 4 528 124 A1**
(43) Veröffentlichungstag der Anmeldung: **26.03.2025**
(21) Anmeldenummer: 24199367.4
(22) Anmeldetag: 10.09.2024
(51) Int. Cl.: F16D 41/067, B62M 6/55, F16D 41/08, F16D 41/10, F16D 41/26, F16D 41/28

(54) **ANTRIEBSVORRICHTUNG FÜR EINE ANTRIEBSEINHEIT EINES ELEKTROFAHRRADS, ANTRIEBSEINHEIT UND ELEKTROFAHRRAD**

(30) Priorität: 20.09.2023 DE 102023209173
(71) Anmelder: Robert Bosch GmbH, 70442 Stuttgart (DE)
(72) Erfinder: Zimmermann, Christoph, 72147 Nehren (DE); Braun, Sigmund, 72127 Kusterdingen (DE); Nau, Alexander, 72800 Eningen Unter Achalm (DE)

(57) **Zusammenfassung**

Die Erfindung geht aus von einer Antriebsvorrichtung (10a; 10b) für eine Antriebseinheit (12a; 12b) eines Elektrofahrrads (14a; 14b), mit einem bidirektionalen Freilauf (16a; 16b), wobei der Freilauf (16a; 16b) zumindest eine Klemmelementeinheit (18a, 18b) umfasst.

Es wird vorgeschlagen, dass die Klemmelementeinheit (18a; 18b) zumindest eine Vorspanneinheit (112a; 112b), die zu einer Erzeugung einer Vorspannkraft vorgesehen ist, umfasst.

## Beschreibung

### Stand der Technik

Es ist bereits eine Antriebsvorrichtung für eine Antriebseinheit eines Elektrofahrrads, mit einem bidirektionalen Freilauf, der zumindest eine Klemmelementeinheit umfasst, vorgeschlagen worden.

### Offenbarung der Erfindung

Die Erfindung geht aus von einer Antriebsvorrichtung für eine Antriebseinheit eines Elektrofahrrads, mit einem bidirektionalen Freilauf, der zumindest eine Klemmelementeinheit umfasst.

Es wird vorgeschlagen, dass die Klemmelementeinheit zumindest eine Vorspanneinheit, die zu einer Erzeugung einer Vorspannkraft vorgesehen ist, umfasst. Vorzugsweise ist der Freilauf als ein kraftschlussbasierter Freilauf ausgebildet. Die Klemmelementeinheit ist bevorzugt als eine Klemmkörpereinheit, als eine Klemmkugeleinheit oder als eine Klemmrolleneinheit ausgebildet. Insbesondere ist der Freilauf verschieden von einem Sperrklinkenfreilauf ausgebildet. Die Antriebseinheit umfasst vorzugsweise einen Elektromotor. Die Antriebseinheit umfasst insbesondere ein Getriebe zur Übertragung einer Antriebskraft der Antriebseinheit an ein Abtriebsritzel der Antriebseinheit. Das Abtriebsritzel ist beispielsweise als ein Kettenblatt oder dergleichen ausgebildet. Das Abtriebsritzel ist vorzugsweise mit einem Getriebeausgang des Getriebes verbunden. Bevorzugt ist die Klemmelementeinheit an dem Getriebeausgang der Antriebseinheit angeordnet. Alternativ ist auch denkbar, dass die Klemmelementeinheit an einer anderen Position innerhalb des Getriebes angeordnet ist. Alternativ ist die Antriebsvorrichtung auch an einem von einem Elektrofahrrad verschiedenen Fahrzeug einsetzbar. Es ist denkbar, dass das Fahrzeug einen Verbrennungsmotor, einen Elektromotor oder dergleichen umfasst.

Die Antriebsvorrichtung umfasst vorzugsweise zumindest ein Kraftübertragungselement zur Übertragung einer Antriebskraft der Antriebseinheit. Die Klemmelementeinheit ist bevorzugt an dem Kraftübertragungselement angeordnet. Das Kraftübertragungselement kann beispielsweise als ein Stirnrad, als ein Planetenrad, als ein Hohlrad, als ein Sonnenrad oder als ein anderes, einem Fachmann als sinnvoll erscheinendes Kraftübertragungselement ausgebildet sein. Vorzugsweise bildet das Kraftübertragungselement den Getriebeausgang der Antriebseinheit. Alternativ ist jedoch auch denkbar, dass das Kraftübertragungselement innerhalb des Getriebes angeordnet ist und insbesondere zu einer Kraftübertragung auf eine Zwischenwelle des Getriebes vorgesehen ist. Die Antriebsvorrichtung umfasst vorzugsweise zumindest eine Welle. Bevorzugt ist die Welle als eine Abtriebswelle ausgebildet. Alternativ ist jedoch auch denkbar, dass die Welle als eine Zwischenwelle, welche insbesondere innerhalb des Getriebes angeordnet ist, oder dergleichen ausgebildet ist. Vorzugsweise ist das Abtriebsritzel drehfest mit der als Abtriebswelle ausgebildeten Welle verbunden. Es ist denkbar, dass das Abtriebsritzel einstückig mit der Abtriebswelle ausgebildet ist. Unter "einstückig" kann zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Die Antriebseinheit umfasst vorzugsweise zumindest eine Tretkurbelwelle. Die Tretkurbelwelle ist vorzugsweise über Pedale durch einen Nutzer antreibbar. Die Antriebsvorrichtung weist insbesondere eine Vorwärtsdrehrichtung auf, welche insbesondere einer Vorwärtsbewegung des Elektrofahrrads entspricht. Das Abtriebsritzel ist bevorzugt derart mit der Tretkurbelwelle verbunden, dass das Abtriebsritzel durch eine Drehung der Tretkurbelwelle antreibbar ist, insbesondere zumindest in einer Drehrichtung, bevorzugt in Richtung der Vorwärtsdrehrichtung der Antriebsvorrichtung. Es ist denkbar, dass die Welle drehbar gelagert mit der Tretkurbelwelle verbunden ist. Zusätzlich ist denkbar, dass die Antriebseinheit einen weiteren Freilauf aufweist, welcher zwischen der Welle und der Tretkurbelwelle angeordnet ist. Der weitere Freilauf ist vorzugsweise dazu vorgesehen, ein Mitdrehen der Tretkurbelwelle bei drehender Welle zu verhindern. Es ist alternativ denkbar, dass die Welle drehfest mit der Tretkurbelwelle verbunden ist. Insbesondere ist alternativ denkbar, dass die Welle einstückig mit der Tretkurbelwelle ausgebildet ist. Ferner ist alternativ denkbar, dass die Welle der Tretkurbelwelle entspricht. Bevorzugt sind die Welle und das Kraftübertragungselement koaxial mit einer Rotationsachse des Freilaufs angeordnet. Insbesondere sind/ist die Welle, die Tretkurbelwelle und/oder das Kraftübertragungselement um die Rotationsachse drehbar gelagert.

Die Klemmelementeinheit ist vorzugsweise dazu eingerichtet, eine Übertragung eines bezüglich der Vorwärtsrichtung des Elektrofahrrads vorwärts gerichteten Motordrehmoments auf die Welle, insbesondere das Abtriebsritzel, zu unterbrechen, wenn eine Drehzahl der Welle größer ist als eine Drehzahl des durch das Motordrehmoment angetriebenen Kraftübertragungselements. Es ist auch denkbar, dass die Klemmelementeinheit dazu eingerichtet ist, eine Übertragung eines bezüglich der Vorwärtsrichtung des Elektrofahrrads rückwärts gerichteten Motordrehmoments auf die Welle, insbesondere das Abtriebsritzel, zu unterbrechen, wenn die Drehzahl der Welle, insbesondere des Abtriebsritzels, größer ist als die Drehzahl des durch das Motordrehmoment angetriebenen Kraftübertragungselements. Die Klemmelementeinheit ist vorzugsweise dazu eingerichtet, eine Übertragung eines Drehmoments der Welle, insbesondere des Abtriebsritzels, von der Welle, insbesondere dem Abtriebsritzel, auf das Kraftübertragungselement, vorzugsweise das Getriebe und/oder den Elektromotor, zu unterbrechen, wenn die Welle, insbesondere das Abtriebsritzel, bezüglich der Vorwärtsdrehrichtung, insbesondere der Vorwärtsrichtung des Elektrofahrrads, rückwärts dreht. Die Klemmelementeinheit ist bevorzugt dazu eingerichtet, die Übertragung des Drehmoments der Welle, insbesondere des Abtriebsritzels, von der Welle, insbesondere von dem Abtriebsritzel, auf das Kraftübertragungselement, vorzugsweise auf das Getriebe und/oder den Elektromotor, unabhängig von der Drehzahl des Kraftübertragungselements und unabhängig von der Drehzahl der Welle, insbesondere des Abtriebsritzels, zu unterbrechen.

Die Klemmelementeinheit umfasst vorzugsweise zumindest ein Klemmelement. Das Klemmelement ist bevorzugt in einem verklemmten Zustand des Klemmelements, insbesondere zwischen dem Kraftübertragungselement und der Welle, zu einer Drehmomentübertragung zwischen dem Kraftübertragungselement und der Welle vorgesehen. Das zumindest eine Klemmelement ist bevorzugt in einem von dem Kraftübertragungselement und/oder der Welle entkoppelten Zustand des Klemmelements, insbesondere in einem freidrehenden und/oder zu dem Kraftübertragungselement und/oder der Welle beabstandeten Zustand des Klemmelements, zu einer Unterbrechung einer Drehmomentübertragung zwischen dem Kraftübertragungselement und der Welle vorgesehen. Das Klemmelement ist beispielsweise als Wälzkörper, als ein, beispielsweise unrunder, Klemmkörper oder dergleichen ausgebildet. Bevorzugt ist das Klemmelement verschieden von einer Sperrklinke ausgebildet. Es ist auch denkbar, dass die Klemmelementeinheit eine Vielzahl von Klemmelementen umfasst, insbesondere zumindest zwei, bevorzugt zumindest drei, Klemmelemente.

Durch die Ausgestaltung der Antriebsvorrichtung kann vorteilhaft ein besonders reaktionsschneller bidirektionaler Freilauf für eine Antriebseinheit eines Elektrofahrrads bereitgestellt werden. Vorteilhaft kann ein besonders geräuscharmer bidirektionaler Freilauf für eine Antriebseinheit eines Elektrofahrrads realisiert werden. Durch die Antriebsvorrichtung kann vorteilhaft ein besonders schonender Betrieb einer Antriebseinheit, insbesondere eines Getriebes und/oder eines Elektromotors, realisiert werden. Vorteilhaft kann einer unerwünschten Drehmomentübertragung von der Welle durch eine Bewegung der Welle in beliebiger Drehrichtung auf das Kraftübertragungselement entgegengewirkt werden. Vorteilhaft kann einer Übertragung von unerwünschten Drehmomenten von einer Abtriebsseite auf den Elektromotor und/oder zumindest einen Teil des Getriebes entgegengewirkt werden.

Vorzugsweise ist die Klemmelementeinheit zur Entkopplung von Schwingungen eines Umschlingungsmittels vorgesehen. Das Umschlingungsmittel ist beispielsweise als eine Kette, als ein Riemen oder dergleichen ausgebildet. Das Umschlingungsmittel ist vorzugsweise drehfest mit der Abtriebswelle, insbesondere dem Abtriebsritzel, verbunden. Das Umschlingungsmittel ist insbesondere dazu vorgesehen, eine Antriebskraft von der, vorzugsweise als Abtriebswelle ausgebildeten, Welle, insbesondere von dem Abtriebsritzel, auf ein Antriebsrad des Elektrofahrrads zu übertragen. Das Antriebsrad ist vorzugsweise als ein Hinterrad des Elektrofahrrads ausgebildet. Alternativ ist jedoch auch denkbar, dass das Antriebsrad als ein Vorderrad des Elektrofahrrads ausgebildet ist. Vorzugsweise ist die Klemmelementeinheit dazu vorgesehen, einer Übertragung von Schwingungen des Umschlingungsmittels auf Bauteile der Antriebseinheit, welche ausgehend vom Umschlingungsmittel im Antriebsstrang hinter der Klemmelementeinheit angeordnet sind, entgegenzuwirken. Bevorzugt ist die Klemmelementeinheit dazu vorgesehen, einer Übertragung von Schwingungen des Umschlingungsmittels auf das Getriebe und/oder den Elektromotor entgegenzuwirken. Vorteilhaft kann ein besonders schonender Betrieb gewährleistet werden. Vorteilhaft kann durch einen Einsatz der Klemmelementeinheit eine besonders langlebige Antriebsvorrichtung, vorzugsweise Antriebseinheit, insbesondere ein besonders langlebiger Elektromotor und/oder ein besonders langlebiges Getriebe, bereitgestellt werden. Vorteilhaft kann einem Getrieberasseln entgegengewirkt werden. Vorteilhaft kann die Entkopplung von Schwingungen eines Umschlingungsmittels besonders geräuscharm erfolgen.

Vorzugsweise umfasst die Klemmelementeinheit zumindest einen Wälzkörper, insbesondere eine Rolle. Alternativ ist auch denkbar, dass der Wälzkörper als eine Kugel, als eine Tonne, als eine Nadel, als ein Kegel oder als ein anderer, einem Fachmann als sinnvoll erscheinender Rotationskörper ausgebildet ist. Bevorzugt ist der Wälzkörper rotationssymmetrisch ausgebildet. Der zumindest eine Wälzkörper ist bevorzugt in einem verklemmten Zustand des Wälzkörpers zu einer Drehmomentübertragung zwischen dem Kraftübertragungselement und der Welle vorgesehen. Der zumindest eine Wälzkörper ist bevorzugt in einem freidrehenden Zustand des Wälzkörpers zu einer Unterbrechung einer Drehmomentübertragung zwischen dem Kraftübertragungselement und der Welle vorgesehen. Vorzugsweise umfasst die Klemmelementeinheit eine Vielzahl von Wälzkörpern, insbesondere zumindest zwei, bevorzugt zumindest drei Wälzkörper. Die Klemmelementeinheit umfasst beispielsweise zumindest eine Hülse, welche insbesondere an dem Kraftübertragungselement angeordnet ist. Die Hülse ist vorzugsweise drehfest mit dem Kraftübertragungselement verbunden. Bevorzugt ist die Hülse einstückig mit dem Kraftübertragungselement ausgebildet. Es ist auch denkbar, dass die Hülse von dem Kraftübertragungselement gebildet ist. Der zumindest eine Wälzkörper ist insbesondere zwischen dem Kraftübertragungselement, insbesondere der Hülse, und der Welle angeordnet. Die Wälzkörper sind vorzugsweise gleichmäßig angeordnet. Vorzugsweise ist eine Vielzahl von Wälzkörpern entlang einer Umfangsrichtung der Welle, welche bevorzugt in einer Ebene senkrecht zu der Rotationsachse verläuft, gleichmäßig angeordnet. Die Antriebsvorrichtung umfasst vorzugsweise zumindest eine Lagereinheit, welche zumindest teilweise zwischen dem Kraftübertragungselement, insbesondere der Hülse, und der Welle angeordnet ist. Die Lagereinheit ist insbesondere zumindest dazu vorgesehen, das Kraftübertragungselement und die Welle gegeneinander drehbar und/oder in festem radialen Abstand relativ zueinander zu lagern. Die Lagereinheit umfasst vorzugsweise zumindest ein Lagerelement, beispielsweise einen Gleitlagerring oder dergleichen. Das zumindest eine Lagerelement ist vorzugsweise zwischen dem Kraftübertragungselement, insbesondere der Hülse, und der Welle angeordnet. Die Klemmelementeinheit weist insbesondere zumindest eine Klemmfläche auf. Das Kraftübertragungselement, insbesondere die Hülse, weist vorzugsweise die zumindest eine Klemmfläche auf. Die Klemmfläche ist insbesondere dazu vorgesehen, mit dem zumindest einen Wälzkörper zu einer Drehmomentübertragung zwischen dem Kraftübertragungselement und der Welle zusammenzuwirken. Die Klemmelementeinheit weist vorzugsweise zumindest eine weitere Klemmfläche auf. Die weitere Klemmfläche ist bevorzugt dazu vorgesehen, mit dem zumindest einen Wälzkörper zu einer Drehmomentübertragung zwischen dem Kraftübertragungselement und der Welle zusammenzuwirken. Die Welle weist bevorzugt eine Kreiszylindermantelfläche auf. Die weitere Klemmfläche ist bevorzugt von der Kreiszylindermantelfläche der Welle gebildet. Besonders bevorzugt ist der zumindest eine Wälzkörper dazu vorgesehen, zu einer Drehmomentübertragung zwischen dem Kraftübertragungselement und der Welle mit der Klemmfläche und der weiteren Klemmfläche verklemmt zu werden. Das Kraftübertragungselement, insbesondere die Hülse, weist vorzugsweise eine Innenfläche auf. Die Innenfläche ist insbesondere der Welle zugewandt. Die Innenfläche weist bevorzugt die zumindest eine Klemmfläche auf. Bevorzugt weist das Kraftübertragungselement, insbesondere die Hülse, zumindest eine Ausnehmung zur Anordnung des zumindest einen Wälzkörpers auf.

Der zumindest eine Wälzkörper ist zumindest teilweise in der zumindest einen Ausnehmung anordenbar. Vorzugsweise ist die Klemmfläche in der zumindest einen Ausnehmung der Hülse, insbesondere des Kraftübertragungselements, angeordnet. Vorzugsweise entspricht eine Anzahl von Ausnehmungen einer Anzahl von Wälzkörpern der Klemmelementeinheit. Vorzugsweise ist die zumindest eine Ausnehmung asymmetrisch ausgebildet, insbesondere zumindest betrachtet in einer Umfangsrichtung des Kraftübertragungselements, welche vorzugsweise in einer Ebene liegt, die senkrecht zu der Rotationsachse verläuft. Vorzugsweise ist die zumindest eine Ausnehmung derart ausgebildet, dass der zumindest eine Wälzkörper in der Ausnehmung in einer Klemmposition an der Klemmfläche und in einer Freidrehposition anordenbar ist. Vorteilhaft kann ein besonders reaktionsschneller bidirektionaler Freilauf realisiert werden. Vorteilhaft kann ein besonders geräuscharmer bidirektionaler Freilauf für eine Antriebseinheit eines Elektrofahrrads realisiert werden.

Vorzugsweise umfasst die Klemmelementeinheit einen Klemmelementhaltekörper. Der Klemmelementhaltekörper weist bevorzugt zumindest einen Aufnahmebereich für das zumindest eine Klemmelement, insbesondere den zumindest einen Wälzkörper, auf. Der Klemmelementhaltekörper ist vorzugsweise ringförmig ausgebildet. Insbesondere ist der Klemmelementhaltekörper als ein Käfigring ausgebildet. Bevorzugt entspricht eine Anzahl von Aufnahmebereichen der Anzahl von Klemmelementen, insbesondere Wälzkörpern, der Klemmelementeinheit. Die Aufnahmebereiche sind bevorzugt voneinander getrennt angeordnet. Der zumindest eine Aufnahmebereich begrenzt vorzugsweise eine Bewegung des zumindest einen Klemmelements, insbesondere des zumindest einen Wälzkörpers, bevorzugt um die Rotationsachse, bevorzugt in Umfangsrichtung, relativ zu dem Klemmelementhaltekörper. Der Klemmelementhaltekörper ist vorzugsweise zwischen der Welle und dem Kraftübertragungselement, insbesondere der Hülse, angeordnet. Bevorzugt ist der Klemmelementhaltekörper relativ zu dem Kraftübertragungselement, insbesondere der Hülse, und/oder der Welle beweglich angeordnet. Insbesondere ist der Klemmelementhaltekörper dazu eingerichtet, den zumindest einen Wälzkörper zu führen. Es ist denkbar, dass das Klemmelement, insbesondere der Wälzkörper, federfrei am Klemmelementhaltekörper angeordnet ist. Bevorzugt ist der zumindest eine Aufnahmebereich für das zumindest eine Klemmelement, insbesondere den zumindest einen Wälzkörper, frei von Federelementen. Insbesondere ist ein Bereich zwischen dem zumindest einen Klemmelement, vorzugsweise dem zumindest einen Wälzkörper, und dem Klemmelementhaltekörper, insbesondere zumindest in dem Aufnahmebereich, frei von Federelementen. Vorzugsweise ist das zumindest eine Klemmelement, insbesondere der zumindest eine Wälzkörper, frei von einer Lagerung an dem Klemmelementhaltekörper mittels Federelementen. Alternativ ist jedoch auch denkbar, dass das zumindest eine Klemmelement, insbesondere der zumindest eine Wälzkörper, federgelagert am Klemmelementhaltekörper, bevorzugt in dem zumindest einen Aufnahmebereich, angeordnet ist. Beispielsweise ist zwischen dem zumindest einen Klemmelement, insbesondere dem zumindest einen Wälzkörper, und dem Klemmelementhaltekörper, bevorzugt in dem Aufnahmebereich, eine Lagerfeder zur gefederten Lagerung des zumindest einen Klemmelements angeordnet. Die Lagerfeder ist beispielsweise als eine Biegefeder, als eine Torsionsfeder, als ein gummielastisches Element oder dergleichen ausgebildet. Es ist denkbar, dass die Lagerfeder an dem Klemmelementhaltekörper befestigt ist. Es ist auch denkbar, dass die Lagerfeder einstückig mit dem Klemmelementhaltekörper ausgebildet ist. Vorteilhaft kann eine besonders zuverlässige Funktion der Klemmelementeinheit realisiert werden. Vorteilhaft kann ein besonders zuverlässiger bidirektionaler Freilauf zur Verfügung gestellt werden.

Vorzugsweise umfasst die Klemmelementeinheit eine mechanische Steuereinheit. Die Steuereinheit ist bevorzugt zu einem Wechsel zwischen einem Freilaufzustand und einem Drehmomentübertragungszustand des Freilaufs vorgesehen. Der Freilaufzustand ist vorzugsweise ein Zustand des Freilaufs, bei dem eine Drehmomentübertragung zwischen dem Kraftübertragungselement und der Welle unterbrochen ist. Der Drehmomentübertragungszustand ist bevorzugt ein Zustand des Freilaufs, bei dem eine Drehmomentübertragung zwischen dem Kraftübertragungselement und der Welle erfolgt. Vorzugsweise erfolgt ein Wechsel zwischen dem Freilaufzustand und dem Drehmomentübertragungszustand mittels der Steuereinheit automatisch, insbesondere frei von einem Eingriff durch einen Nutzer und/oder frei von einer elektronischen Steuerung. Die Steuereinheit ist bevorzugt frei von elektrischen Bauteilen. Alternativ ist jedoch auch denkbar, dass die Klemmelementeinheit eine elektronische Steuereinheit umfasst. Vorteilhaft kann auf eine elektrische Energieversorgung für eine Steuerung der Klemmelementeinheit verzichtet werden.

Vorzugsweise umfasst die Steuereinheit eine Reibeinheit, die zu einer Erzeugung einer Stellkraft vorgesehen ist. Die Reibeinheit ist insbesondere dazu vorgesehen, den Klemmelementhaltekörper relativ zu dem Kraftübertragungselement und/oder der Welle zu bewegen, bevorzugt um die Rotationsachse zu drehen. Besonders bevorzugt ist die Reibeinheit zumindest dazu vorgesehen, einen Drehmomentübertragungszustand des Freilaufs in Abhängigkeit von einer Relativbewegung des Kraftübertragungselements zu der Welle zu lösen. Vorzugsweise ist die Reibeinheit zumindest dazu vorgesehen, den Freilauf in Abhängigkeit von einer Relativbewegung des Kraftübertragungselements zu der Welle durch die Stellkraft von dem Drehmomentübertragungszustand des Freilaufs in den Freilaufzustand des Freilaufs zu schalten. Die Reibeinheit ist insbesondere dazu vorgesehen, den zumindest einen Wälzkörper relativ zu dem Kraftübertragungselement, insbesondere der Hülse, und/oder der Welle zu positionieren, vorzugsweise um den Freilauf zu schalten, bevorzugt zumindest von dem Drehmomentübertragungszustand in den Freilaufzustand. Die Reibeinheit ist zur Erzeugung einer Reibungskraft zwischen dem Klemmelementhaltekörper und einem von dem Klemmelementhaltekörper getrennt ausgebildeten Reibkörper vorgesehen. Vorzugsweise ist durch die Reibeinheit ein Reibkontakt zwischen dem Klemmelementhaltekörper und dem Reibkörper gebildet. Die Reibeinheit weist insbesondere zumindest ein Reibelement auf. Bevorzugt umfasst die Reibeinheit eine Vielzahl von Reibelementen, vorzugsweise zumindest zwei, besonders bevorzugt zumindest drei Reibelemente. Das zumindest eine Reibelement ist zur Bildung des Reibkontakts zwischen dem Klemmelementhaltekörper und dem Reibkörper vorgesehen. Das zumindest eine Reibelement weist vorzugsweise zumindest eine Reibfläche zur Bildung des Reibkontakts zwischen dem Klemmelementhaltekörper und dem Reibkörper auf. Vorzugsweise ist das zumindest eine Reibelement an dem Klemmelementhaltekörper befestigt. Es ist denkbar, dass das zumindest eine Reibelement einstückig mit dem Klemmelementhaltekörper oder getrennt von dem Klemmelementhaltekörper ausgebildet ist. Alternativ ist auch denkbar, dass das zumindest eine Reibelement an dem Reibkörper befestigt ist, insbesondere einstückig mit dem Reibkörper ausgebildet ist. Das Reibelement ist vorzugsweise als ein federelastisches Element, als ein gummielastisches Element oder als ein anderes, einem Fachmann als sinnvoll erscheinendes Reibelement ausgebildet. Der Reibkörper ist vorzugsweise durch ein feststehendes Bauteil des Freilaufs gebildet. Insbesondere in zumindest einem Ausführungsbeispiel ist der Reibkörper drehfest mit einem Gehäusebauteil eines Gehäuses der Antriebseinheit verbunden. Der Reibkörper ist beispielsweise als ein Reibring oder dergleichen ausgebildet. Alternativ ist auch denkbar, dass der Reibkörper durch ein feststehendes Bauteil des Elektrofahrrads, insbesondere der Antriebseinheit, gebildet ist. Der Reibkörper ist alternativ beispielsweise durch ein Rahmenelement des Rahmens des Elektrofahrrads, das Gehäusebauteil des Gehäuses der Antriebseinheit oder dergleichen gebildet. Vorzugsweise ist die Stellkraft eine Reibungskraft. Insbesondere ist die Reibeinheit dazu vorgesehen, in zumindest einem Betriebszustand des Freilaufs die Stellkraft durch Haft- und/oder Gleitreibung zwischen dem Klemmelementhaltekörper und dem Reibkörper zu erzeugen. Die Stellkraft, insbesondere die Reibungskraft, wirkt vorzugsweise zumindest in dem Betriebszustand des Freilaufs entgegen einem am Klemmelementhaltekörper anliegenden Drehmoment. Bevorzugt ist die Stellkraft, vorzugsweise die Reibungskraft, dazu vorgesehen, eine Drehung des Klemmelementhaltekörpers um die Rotationsachse relativ zu der Welle zu verzögern, insbesondere zumindest in dem Freilaufzustand. Die Klemmelementeinheit ist bevorzugt dazu eingerichtet, den zumindest Wälzkörper in der zumindest einen Ausnehmung mittels der zumindest einen Klemmfläche zu verklemmen, wenn die Drehzahl des Kraftübertragungselements in Vorwärtsdrehrichtung größer ist als oder gleich groß ist wie die Drehzahl der Welle. Die Reibeinheit ist bevorzugt bei einer Drehung des Kraftübertragungselements in Vorwärtsdrehrichtung, wobei eine Drehzahl des Kraftübertragungselements größer ist als eine Drehzahl der Welle, dazu vorgesehen, mittels der Stellkraft, insbesondere der Reibungskraft, den Klemmelementhaltekörper relativ zu dem Kraftübertragungselement zu bremsen, um bevorzugt den zumindest einen Wälzkörper mit der zumindest einen Klemmfläche in der zumindest einen Ausnehmung des Kraftübertragungselements, insbesondere der Hülse, in Kontakt zu bringen und zu verklemmen. Insbesondere ist die Klemmelementeinheit dazu vorgesehen, über die Stellkraft, vorzugsweise die Reibungskraft, bei einer bezüglich der Vorwärtsdrehrichtung rückwärts gerichteten Drehung der Welle eine Kraft auf den zumindest einen Wälzkörper zu erzeugen, um vorzugsweise den zumindest einen Wälzkörper von der zumindest einen Klemmfläche zu lösen, so dass der Freilauf bevorzugt in den Freilaufzustand geschaltet ist. Bevorzugt ist durch die Stellkraft, insbesondere die Reibungskraft, eine Verklemmung des zumindest einen Wälzkörpers mit dem Kraftübertragungselement, insbesondere der Hülse, und der Welle erzeugbar, wenn die Drehzahl des Kraftübertragungselements größer ist als die Drehzahl der Welle, vorzugsweise zumindest bei einer bezüglich der Vorwärtsdrehrichtung vorwärts gerichteten Drehung des Kraftübertragungselements. Durch die Verklemmung des zumindest einen Wälzkörpers mit dem Kraftübertragungselement, insbesondere der Hülse, und der Welle ist vorzugsweise ein Drehmoment zwischen dem Kraftübertragungselement und der Welle übertragbar. Der zumindest eine Wälzkörper ist vorzugsweise in dem Drehmomentübertragungszustand drehfest mit dem Kraftübertragungselement, insbesondere der Hülse, und der Welle verbunden. Der zumindest eine Wälzkörper befindet sich insbesondere in der Klemmposition, wenn sich der Freilauf in dem Drehmomentübertragungszustand befindet. Vorzugsweise ist der zumindest eine Wälzkörper in dem Freilaufzustand freidrehend in der zumindest einen Ausnehmung angeordnet. Vorzugsweise befindet sich der zumindest eine Wälzkörper in einer Freidrehposition, wenn sich der Freilauf in dem Freilaufzustand befindet. Insbesondere ist der zumindest eine Wälzkörper in der zumindest einen Ausnehmung freidrehend angeordnet, wenn die Welle bezüglich der Vorwärtsdrehrichtung rückwärts dreht. Vorzugsweise ist der zumindest eine Wälzkörper in der zumindest einen Ausnehmung freidrehend angeordnet, wenn die Welle bezüglich der Vorwärtsdrehrichtung vorwärts dreht und die Drehzahl der Welle größer ist als die Drehzahl des Kraftübertragungselements. Vorzugsweise ist der zumindest eine Wälzkörper in der zumindest einen Ausnehmung freidrehend angeordnet, wenn das Kraftübertragungselement bezüglich der Vorwärtsdrehrichtung rückwärts dreht. Die Klemmelementeinheit ist insbesondere dazu vorgesehen, den zumindest einen Wälzkörper mittels des Klemmelementhaltekörpers aus der Verklemmung zu lösen, wenn die Drehzahl der Welle größer ist als die Drehzahl des Kraftübertragungselements. Vorteilhaft kann eine mechanische Steuereinheit für die Klemmelementeinheit konstruktiv einfach realisiert werden. Vorteilhaft kann eine besonders robuste mechanische Steuerung für die Klemmelementeinheit zur Verfügung gestellt werden.

Vorzugsweise weist die Reibeinheit zumindest eine Federeinheit auf. Vorzugsweise ist der Klemmelementhaltekörper über die Federeinheit mit dem Reibkörper verbunden. Die Federeinheit ist vorzugsweise dazu vorgesehen, eine Haltekraft zwischen dem Klemmelementhaltekörper und dem Reibkörper zu erzeugen. Bevorzugt ist die Federeinheit dazu vorgesehen, die Stellkraft, insbesondere die Reibungskraft, der Reibeinheit zu erzeugen. Die Federeinheit weist beispielsweise zumindest ein Federelement auf. Vorzugsweise ist das zumindest eine Reibelement durch das zumindest eine Federelement gebildet. Es ist denkbar, dass das zumindest eine Federelement als eine Biegefeder, als eine Torsionsfeder, als eine Tellerfeder, als eine Evolutfeder, als eine Ringfeder oder dergleichen ausgebildet ist. Alternativ ist auch denkbar, dass das Federelement als ein gummielastisches Element ausgebildet ist. Das zumindest eine Federelement ist vorzugsweise an dem Klemmelementhaltekörper angeordnet. Bevorzugt ist das zumindest eine Federelement zwischen dem Klemmelementhaltekörper und dem Reibkörper angeordnet. Insbesondere ist der Klemmelementhaltekörper über das zumindest eine Federelement mit dem Reibkörper verbindbar. Vorteilhaft kann eine mechanische Steuereinheit für die Klemmelementeinheit konstruktiv einfach realisiert werden. Vorteilhaft kann eine besonders robuste mechanische Steuerung für die Klemmelementeinheit zur Verfügung gestellt werden. Vorteilhaft kann ein besonders wirksamer Reibkontakt zwischen dem Klemmelementhaltekörper und dem Reibkörper realisiert werden.

Bevorzugt umfasst die Federeinheit zumindest eine Biegefeder. Beispielsweise ist die zumindest eine Biegefeder von dem zumindest einen Federelement gebildet. Vorzugsweise ist die Federeinheit frei von Schraubenfedern ausgebildet. Die zumindest eine Biegefeder ist beispielsweise als eine Blattfeder, als eine Drahtfeder, insbesondere als eine Nadelfeder, als eine Schenkelfeder oder dergleichen ausgebildet. Vorteilhaft kann ein besonders wirksamer Reibkontakt zwischen dem Klemmelementhaltekörper und dem Reibkörper realisiert werden.

Vorzugsweise umfasst die Federeinheit zumindest eine Blattfeder. Bevorzugt ist die zumindest eine Blattfeder von dem zumindest einen Federelement, insbesondere der zumindest einen Biegefeder, gebildet. Es ist denkbar, dass die Blattfeder als eine Spiralfeder, als eine Prellfeder, als eine Elliptikfeder, als eine Parabelfeder, als eine Wellenfeder oder als eine andere, einem Fachmann als sinnvoll erscheinende Blattfeder ausgebildet ist. Die Blattfeder weist vorzugsweise zumindest einen Federflügel auf. Insbesondere ist an dem zumindest einen Federelement, insbesondere an der Blattfeder, die zumindest eine Reibfläche der Reibeinheit angeordnet. Bevorzugt ist an dem zumindest einen Federflügel die Reibfläche des Reibelements angeordnet. Es ist denkbar, dass die Blattfeder als eine einflügligle oder als eine zumindest zweiflügligle Blattfeder ausgebildet ist. Es ist denkbar, dass sich die Reibfläche in axialer Richtung und/oder in radialer Richtung erstreckt. Es ist denkbar, dass die Reibfläche zumindest teilweise gekrümmt ist und/oder zumindest teilweise geradlinig verläuft. Vorzugsweise verläuft zumindest eine Haupterstreckungsebene der sich zumindest axial erstreckenden Reibfläche zumindest im Wesentlichen parallel zu der axialen Richtung. Unter einer "Haupterstreckungsebene" einer Baueinheit oder eines Elements kann eine Ebene verstanden werden, welche parallel zu einer größten Seitenfläche eines kleinstmöglichen gedachten Quaders ist, welcher die Baueinheit oder das Element gerade noch vollständig umschließt, und welche insbesondere durch den Mittelpunkt des Quaders verläuft. Unter "im Wesentlichen parallel" kann hier eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Vorzugsweise verläuft zumindest die Haupterstreckungsebene der sich zumindest radial erstreckenden Reibfläche zumindest im Wesentlichen parallel zu der radialen Richtung. Es ist denkbar, dass die, insbesondere sich in axialer Richtung erstreckende, Reibfläche radial nach innen oder radial nach außen ausgerichtet ist. Es ist auch denkbar, dass die, insbesondere sich in radialer Richtung erstreckende, Reibfläche in Richtung des Klemmelementhaltekörpers oder dem Klemmelementhaltekörper abgewandt ausgerichtet ist, vorzugsweise zumindest in axialer Richtung betrachtet. Vorteilhaft kann ein besonders wirksamer Reibkontakt zwischen dem Klemmelementhaltekörper und dem Reibkörper realisiert werden.

Die Blattfeder ist beispielsweise als eine zumindest zweiflüglige Blattfeder ausgebildet. Vorzugsweise weist die zumindest zweiflüglige Blattfeder zumindest zwei Reibflächen der Reibeinheit zur Bildung des Reibkontakts zwischen dem Klemmelementhaltekörper und dem Reibkörper auf. Insbesondere weist die zumindest zweiflüglige Feder zumindest zwei Federflügel auf. An den Federflügeln ist vorzugsweise jeweils eine der Reibflächen angeordnet. Vorteilhaft kann durch die zweiflüglige Blattfeder ein besonders wirksamer Reibkontakt zwischen dem Klemmelementhaltekörper und dem Reibkörper realisiert werden. Vorteilhaft kann eine besonders große Reibfläche realisiert werden.

Die Federeinheit weist beispielsweise zumindest ein, insbesondere das zuvor bereits genannte, Federelement auf, welches eine, insbesondere die zuvor bereits genannte, Rotationsachse des Freilaufs zumindest zum Großteil umgibt. Darunter, dass ein Element eine Achse zumindest zum Großteil umgibt, soll insbesondere verstanden werden, dass das Element die Achse zu zumindest 55 %, vorzugsweise zu zumindest 65 %, bevorzugt zu zumindest 75 %, besonders bevorzugt zu zumindest 85 % und ganz besonders bevorzugt zumindest zu zumindest 95 % in einer Umfangsrichtung, welche in einer Ebene liegt, die senkrecht zu der Achse verläuft, der Achse umgibt. Das Federelement, welches die Rotationsachse des Freilaufs zumindest zum Großteil umgibt, ist vorzugsweise ringförmig ausgebildet. Es ist denkbar, dass das zumindest eine Federelement, welches die Rotationsachse des Freilaufs zumindest zum Großteil umgibt, zumindest teilweise einen gekrümmten Verlauf entlang seiner Haupterstreckung aufweist und/oder zumindest teilweise zueinander abgewinkelte, geradlinig verlaufende Abschnitte entlang seiner Haupterstreckung aufweist. Vorteilhaft kann eine Federeinheit zur Verfügung gestellt werden, die konstruktiv besonders einfach realisierbar ist. Vorteilhaft können besonders viele Kontaktstellen zwischen dem zumindest einen Federelement und dem Klemmelementhaltekörper realisiert werden. Vorteilhaft können besonders viele Kontaktstellen zwischen dem zumindest einen Federelement und dem Reibkörper realisiert werden. Vorteilhaft kann ein besonders wirksamer und/oder gleichmäßiger Reibkontakt zwischen dem Klemmelementhaltekörper und dem Reibkörper realisiert werden. Vorteilhaft kann eine Federeinheit mit besonders geringer Bauteilanzahl realisiert werden. Vorteilhaft kann eine besonders einfache und schnelle Montage der Federeinheit an dem Klemmelementhaltekörper realisiert werden.

Die Federeinheit umfasst beispielsweise zumindest ein, insbesondere das zuvor bereits genannte, Federelement mit zumindest einer Montagerampe . Die Montagerampe ist insbesondere dazu vorgesehen, das zumindest eine Federelement bei einer Montage des Federelements an dem Reibkörper zu führen. Vorzugsweise ist die Montagerampe dazu vorgesehen, bei der Montage des Federelements an dem Reibkörper den Reibkörper zu kontaktieren und insbesondere das Federelement bei einer Bewegung in Richtung einer vorgesehenen Montageposition zu führen. Die zumindest eine Montagerampe ist vorzugsweise an dem zumindest einen Federflügel des als Blattfeder ausgebildeten Federelements angeordnet. Die Montagerampe ist insbesondere durch eine zu der Rotationsachse abgewinkelt, vorzugsweise verschieden von senkrecht, verlaufende Fläche gebildet. Vorteilhaft kann eine besonders einfache und/oder schnelle Montage der Klemmelementeinheit an dem Reibkörper realisiert werden. Vorteilhaft kann eine besonders schnelle und kostengünstige Herstellung eines bidirektionalen Freilaufs mit einer Klemmelementeinheit erreicht werden.

Die Federeinheit umfasst beispielsweise zumindest ein, insbesondere das zuvor bereits genannte, Federelement, welches separat zu dem Klemmelementhaltekörper ausgebildet ist. Es ist denkbar, dass das zum Klemmelementhaltekörper separat ausgebildete Federelement an dem Klemmelementhaltekörper befestigt ist oder an dem Reibkörper befestigt ist, insbesondere einstückig mit dem Reibkörper ausgebildet ist. Es ist auch denkbar, dass das separat zum Klemmelementhaltekörper ausgebildete Federelement zumindest teilweise aus einem Material gebildet ist, welches einem Material des Klemmelementhaltekörpers entspricht oder verschieden ist von dem Material des Klemmelementhaltekörpers. Beispielsweise ist der Klemmelementhaltekörper aus einem Kunststoff gebildet. Alternativ ist jedoch auch denkbar, dass der Klemmelementhaltekörper aus einem Metall oder einem anderen, einem Fachmann als sinnvoll erscheinenden Material gebildet ist. Vorzugsweise ist das zumindest eine Federelement aus einem Metall gebildet. Alternativ ist jedoch auch denkbar, dass das Federelement aus einem Kunststoff oder einem anderen, einem Fachmann als sinnvoll erscheinenden Material gebildet ist. Vorteilhaft können für das zumindest eine Federelement und den Klemmelementhaltekörper unterschiedliche Materialien verwendet werden. Vorteilhaft können die Materialien für den Klemmelementhaltekörper und das zumindest eine Federelement besonders geeignet gewählt werden. Vorteilhaft können die Materialien für die Klemmelementeinheit zumindest hinsichtlich Kosten, Stabilität, Gewicht und/oder Langlebigkeit besonders flexibel gewählt werden.

Die Federeinheit weist beispielsweise zumindest ein, insbesondere das zuvor bereits genannte, Federelement auf, welches an einem vom Klemmelementhaltekörper getrennten Körper befestigt ist. Der Körper ist vorzugsweise ein feststehendes Bauteil des Freilaufs oder des Elektrofahrrads, insbesondere der Antriebseinheit. Beispielsweise ist der Körper durch das Gehäusebauteil der Antriebseinheit, das Rahmenelement oder dergleichen gebildet. Es ist denkbar, dass der Körper von dem Reibkörper gebildet ist. Es ist denkbar, dass das zumindest eine Federelement einstückig mit dem Körper ausgebildet ist oder, vorzugsweise zerstörungsfrei, lösbar an dem Körper befestigt ist. Vorteilhaft kann eine Gesamtmasse von sich bewegenden Teilen der Antriebsvorrichtung gering gehalten werden. Vorteilhaft können unerwünschte Trägheitskräfte gering gehalten werden. Vorteilhaft kann eine besonders reaktionsschnelle Klemmelementeinheit für den bidirektionalen Freilauf zur Verfügung gestellt werden.

Die Federeinheit umfasst beispielsweise zumindest ein, insbesondere das zuvor bereits genannte, Federelement, welches an dem Klemmelementhaltekörper befestigt ist. Beispielsweise ist das Federelement einstückig mit dem Klemmelementhaltekörper ausgebildet, mit dem Klemmelementhaltekörper verrastet, verklemmt, verschraubt oder dergleichen. Vorteilhaft kann eine besonders zuverlässige Positionierung des Federelements erreicht werden. Vorteilhaft kann eine besonders zuverlässige und präzise Funktion der Klemmelementeinheit, vorzugsweise der Steuereinheit, realisiert werden.

Die Federeinheit umfasst beispielsweise zumindest ein, insbesondere das zuvor bereits genannte, Federelement, welches einstückig mit dem Klemmelementhaltekörper ausgebildet ist. Vorteilhaft kann eine besonders robuste Klemmelementeinheit zur Verfügung gestellt werden. Vorteilhaft kann eine besonders sichere Verbindung zwischen dem Klemmelementhaltekörper und den Federelementen erreicht werden. Vorteilhaft kann eine Steuereinheit zur Steuerung der Klemmelementeinheit mit einer besonders hohen Zuverlässigkeit realisiert werden.

Die Federeinheit umfasst beispielsweise zumindest ein, insbesondere das zuvor bereits genannte, Federelement, welches von dem Klemmelementhaltekörper umspritzt ist. Bevorzugt ist das Federelement zumindest teilweise von dem Klemmelementhaltekörper umspritzt. Vorteilhaft kann eine besonders sichere Verbindung zwischen dem Klemmelementhaltekörper und den Federelementen erreicht werden. Vorteilhaft kann eine Steuereinheit zur Steuerung der Klemmelementeinheit mit einer besonders hohen Zuverlässigkeit realisiert werden. Vorteilhaft ist das zumindest eine Federelement besonders verliersicher angeordnet.

Die Reibeinheit umfasst vorzugsweise eine sich in axialer Richtung erstreckende, insbesondere die zuvor bereits genannte, Reibfläche. Die axiale Richtung verläuft vorzugsweise parallel zu der Rotationsachse. Vorteilhaft kann zumindest in radialer Richtung eine besonders kompakte Bauform der Antriebsvorrichtung erreicht werden.

Die sich in axialer Richtung erstreckende Reibfläche ist betrachtet in axialer Richtung vorzugsweise auf einer dem Klemmelementhaltekörper zugewandten Seite angeordnet. Vorzugsweise ist in zumindest einem Ausführungsbeispiel der zumindest eine Federflügel des Federelements auf der dem Klemmelementhaltekörper zugewandten Seite angeordnet, insbesondere zumindest in axialer Richtung betrachtet. Vorteilhaft kann eine besonders kompakte Klemmelementeinheit für den bidirektionalen Freilauf realisiert werden.

Die sich in axialer Richtung erstreckende Reibfläche ist betrachtet in axialer Richtung alternativ beispielsweise auf einer dem Klemmelementhaltekörper abgewandten Seite angeordnet. Vorzugsweise ist in zumindest einem Ausführungsbeispiel der zumindest eine Federflügel des Federelements auf der dem Klemmelementhaltekörper abgewandten Seite angeordnet, insbesondere zumindest in axialer Richtung betrachtet. Vorteilhaft kann eine besonders einfache Montage des Klemmelementhaltekörpers an dem Reibkörper erreicht werden.

In zumindest einem Ausführungsbeispiel ist die sich in axialer Richtung erstreckende Reibfläche betrachtet in radialer Richtung beispielsweise nach innen ausgerichtet. Vorzugsweise ist die zumindest eine Reibfläche in zumindest einem Ausführungsbeispiel der Welle zugewandt angeordnet. Insbesondere ist die zumindest eine Reibfläche in zumindest einem Ausführungsbeispiel der Rotationsachse zugewandt angeordnet. Vorteilhaft kann eine besonders kompakte Klemmelementeinheit mit einer Reibeinheit realisiert werden. Vorteilhaft kann ein besonders reaktionsschneller Freilauf mit einer besonders kompakten Bauform zur Verfügung gestellt werden.

Die Reibeinheit umfasst vorzugsweise zumindest zwei, insbesondere die zuvor bereits genannten, Reibelemente zur Erzeugung einer Stellkraft, wobei die Reibelemente gleichmäßig in einer Umfangsrichtung, welche insbesondere in einer Ebene senkrecht zu der Rotationsachse verläuft, des Klemmelementhaltekörpers angeordnet sind. Bevorzugt sind die Reibelemente gleichmäßig in Umfangsrichtung an dem Klemmelementhaltekörper oder dem Reibkörper angeordnet. Vorzugsweise sind die Reibelemente durch Federelemente der Federeinheit gebildet. Alternativ ist jedoch auch denkbar, dass die Reibelemente ungleichmäßig in Umfangsrichtung, vorzugsweise an dem Klemmelementhaltekörper oder dem Reibkörper, angeordnet sind. Vorteilhaft kann eine besonders gleichmäßige Haltekraft und/oder Reibkraft zwischen dem Klemmelementhaltekörper und dem Reibkörper realisiert werden. Vorteilhaft kann eine besonders zuverlässige und präzise Funktion der Klemmelementeinheit für den bidirektionalen Freilauf zur Verfügung gestellt werden.

Die Antriebsvorrichtung umfasst vorzugsweise zumindest ein, insbesondere das zuvor bereits genannte, Kraftübertragungselement zur Übertragung einer Antriebskraft der Antriebseinheit, welches zumindest eine Durchführung aufweist, durch welche der Klemmelementhaltekörper zumindest teilweise in radialer Richtung nach außen geführt ist. Es ist denkbar, dass eine Anzahl an Durchführungen einer Anzahl von Reibelementen, insbesondere Federelementen, entspricht. Es ist jedoch auch denkbar, dass die Anzahl an Durchführungen verschieden ist von einer Anzahl an Reibelementen, insbesondere Federelementen. Insbesondere in zumindest einem Ausführungsbeispiel ist das zumindest eine Reibelemente, vorzugsweise das zumindest eine Federelement, zumindest teilweise in der zumindest einen Durchführung angeordnet. Insbesondere in zumindest einem Ausführungsbeispiel ist die zumindest eine Durchführung frei von Reibelementen, insbesondere Federelementen. Vorteilhaft kann ein besonders reaktionsschneller bidirektionaler Freilauf besonders kompakt ausgeführt werden. Vorteilhaft kann durch die Ausgestaltung des Kraftübertragungselements mit Durchführungen Gewicht eingespart werden.

Die Antriebsvorrichtung umfasst vorzugsweise zumindest ein, insbesondere das zuvor bereits genannte, Kraftübertragungselement zur Übertragung einer Antriebskraft der Antriebseinheit, wobei das Kraftübertragungselement als ein Stirnrad ausgebildet ist. Das Stirnrad weist bevorzugt eine Außenverzahnung auf. Es ist denkbar, dass die Außenverzahnung als eine Geradverzahnung oder als eine Schrägverzahnung ausgebildet ist. Vorteilhaft kann eine besonders einfache Montage der Klemmelementeinheit an dem Kraftübertragungselement erreicht werden.

Bevorzugt beträgt ein Wert eines maximalen Durchmessers des zumindest einen Wälzkörpers zwischen 6 % und 20 % von einem Wert eines maximalen Innendurchmessers des Kraftübertragungselements, insbesondere der Hülse. Vorzugsweise beträgt ein Wert des maximalen Durchmessers des zumindest einen Wälzkörpers maximal 15 %, besonders bevorzugt maximal 10 % von einem Wert des maximalen Innendurchmessers des Kraftübertragungselements, insbesondere der Hülse. Alternativ ist jedoch auch denkbar, dass ein Wert des maximalen Durchmessers des zumindest einen Wälzkörpers außerhalb eines Bereichs von 6 % bis 20 % von einem Wert des maximalen Innendurchmessers des Kraftübertragungselements, insbesondere der Hülse, beträgt. Insbesondere ist der Innendurchmesser in radialer Richtung gemessen. Vorzugsweise ist der maximale Durchmesser des Wälzkörpers in radialer Richtung gemessen. Vorteilhaft kann eine Klemmelementeinheit mit einer besonders hohen Packungsdichte bezüglich der Wälzkörper erreicht werden. Vorteilhaft kann durch die hohe Packungsdichte der Wälzkörper in dem Klemmelementhaltekörper ein besonders zuverlässiger und präziser bidirektionaler Freilauf realisiert werden.

Die Antriebsvorrichtung umfasst vorzugsweise zumindest eine, insbesondere die zuvor bereits genannte, Welle , wobei ein Wert eines, insbesondere des zuvor bereits genannten, maximalen Durchmessers des zumindest einen Wälzkörpers zwischen 8 % und 25 % von einem Wert eines maximalen Durchmessers der Welle beträgt. Vorzugsweise beträgt ein Wert des maximalen Durchmessers des zumindest einen Wälzkörpers maximal 15 %, besonders bevorzugt maximal 12 % von einem Wert des maximalen Durchmessers der Welle. Alternativ ist jedoch auch denkbar, dass ein Wert des maximalen Durchmessers des zumindest einen Wälzkörpers außerhalb eines Bereichs von 8 % bis 25 % von einem Wert des maximalen Durchmessers der Welle beträgt. Insbesondere ist der maximale Durchmesser der Welle in radialer Richtung gemessen. Insbesondere beträgt ein Wert des maximalen Durchmessers der Welle maximal 38 mm, besonders bevorzugt beträgt ein Wert des maximalen Durchmessers der Welle 32 mm. Vorteilhaft kann eine Klemmelementeinheit mit einer besonders hohen Packungsdichte bezüglich der Wälzkörper erreicht werden. Vorteilhaft kann durch die hohe Packungsdichte der Wälzkörper in dem Klemmelementhaltekörper ein besonders zuverlässiger und präziser bidirektionaler Freilauf realisiert werden.

Ein Wert eines, insbesondere des zuvor bereits genannten, maximalen Innendurchmessers des Kraftübertragungselements, insbesondere der Hülse, beträgt vorzugsweise maximal 46 mm. Vorzugsweise beträgt ein Wert des maximalen Innendurchmessers des Kraftübertragungselements, insbesondere der Hülse, zwischen 40 mm und 41 mm. Alternativ ist jedoch auch denkbar, dass ein Wert des maximalen Innendurchmessers des Kraftübertragungselements größer ist als 46 mm. Vorteilhaft kann eine besonders kompakte Antriebsvorrichtung mit einem bidirektionalen Freilauf zur Verfügung gestellt werden.

Ein Wert eines, insbesondere des zuvor bereits genannten, maximalen Durchmessers des Wälzkörpers beträgt vorzugsweise maximal 5 mm. Vorzugsweise beträgt ein Wert des maximalen Durchmessers des Wälzkörpers im Wesentlichen 3,5 mm. Darunter, dass eine Größe einen angegebenen Wert zumindest im Wesentlichen beträgt, soll insbesondere verstanden werden, dass ein tatsächlicher Wert der Größe maximal 10 %, besonders bevorzugt maximal 5 %, von dem angegebenen Wert abweicht. Alternativ ist jedoch auch denkbar, dass ein Wert des maximalen Durchmessers des Wälzkörpers größer ist als 5 mm. Vorteilhaft kann eine besonders kompakte Antriebsvorrichtung mit einem bidirektionalen Freilauf zur Verfügung gestellt werden. Vorteilhaft kann eine Klemmelementeinheit mit einer besonders hohen Packungsdichte bezüglich der Wälzkörper erreicht werden. Vorteilhaft kann durch die hohe Packungsdichte der Wälzkörper in dem Klemmelementhaltekörper ein besonders zuverlässiger und präziser bidirektionaler Freilauf realisiert werden.

Ein maximaler Bewegungswinkel, insbesondere Translationswinkel, des Wälzkörpers relativ zu dem Klemmelementhaltekörper um eine, insbesondere die zuvor bereits genannte, Rotationsachse des Freilaufs beträgt bevorzugt maximal 1,5°. Bevorzugt beträgt der maximale Bewegungswinkel, insbesondere Translationswinkel, des zumindest einen Wälzkörpers relativ zu dem Klemmelementhaltekörper zwischen 0° und 1°. Insbesondere in einem Ausführungsbeispiel, in dem der Wälzkörper federgelagert an dem Klemmelementhaltekörper angeordnet ist. Besonders bevorzugt beträgt der maximale Bewegungswinkel, insbesondere Translationswinkel, des zumindest einen Wälzkörpers relativ zu dem Klemmelementhaltekörper im Wesentlichen 0,5°. Alternativ ist jedoch auch denkbar, dass der maximale Bewegungswinkel, insbesondere Translationswinkel, des zumindest einen Wälzkörpers relativ zu dem Klemmelementhaltekörper um die Rotationsachse größer ist als 1,5°. Vorteilhaft kann ein besonders reaktionsschneller und präziser bidirektionaler Freilauf zur Verfügung gestellt werden.

Ein maximaler Winkel zwischen einer, insbesondere der zuvor bereits genannten, Klemmposition des Wälzkörpers und einer maximalen Freidrehposition des Wälzkörpers um eine, insbesondere die zuvor bereits genannte, Rotationsachse des Freilaufs beträgt vorzugsweise maximal 5°. Vorzugsweise beträgt der maximale Winkel zwischen der Klemmposition des Wälzkörpers und der maximalen Freidrehposition des Wälzkörpers um die Rotationsachse des Freilaufs maximal 2,5°. Bevorzugt beträgt der maximale Winkel zwischen der Klemmposition des Wälzkörpers und der maximalen Freidrehposition des Wälzkörpers um die Rotationsachse des Freilaufs zwischen 0,3° und 2,5°, besonders bevorzugt zwischen 0,4° und 2°. Ganz besonders bevorzugt beträgt der maximale Winkel zwischen der Klemmposition des zumindest einen Wälzkörpers und der maximalen Freidrehposition des zumindest einen Wälzkörpers um die Rotationsachse zumindest im Wesentlichen 0,8°. Die maximale Freidrehposition und/oder die Klemmposition des Wälzkörper befinden/befindet sich insbesondere in der zumindest einen Ausnehmung für den zumindest einen Wälzkörper. Die maximale Freidrehposition und die Klemmposition befinden sich vorzugsweise an einander entgegengesetzten Endbereichen der Ausnehmung. Bevorzugt ist die zumindest eine weitere Klemmfläche auf einer bezüglich der Vorwärtsdrehrichtung hinteren Seite der Ausnehmung angeordnet. Bevorzugt ist die Freidrehposition auf einer bezüglich der Vorwärtsdrehrichtung vorderen Seite der Ausnehmung angeordnet. Insbesondere weist die Ausnehmung in dem Endbereich, in dem sich insbesondere die Freidrehposition des zumindest einen Wälzkörpers befindet, einen Anschlag für den zumindest einen Wälzkörper auf. Insbesondere befindet sich der Wälzkörper in der maximalen Freidrehposition, wenn der Wälzkörper an dem Anschlag der Ausnehmung anliegt. Alternativ ist auch denkbar, dass der maximale Winkel zwischen der Klemmposition und der maximalen Freidrehposition des Wälzkörpers um die Rotationsachse des Freilaufs größer ist als 5°. Vorteilhaft kann ein besonders reaktionsschneller und präziser bidirektionaler Freilauf zur Verfügung gestellt werden.

Die Klemmelementeinheit und das Kraftübertragungselement weisen vorzugsweise eine gemeinsame Schnittebene auf, welche zumindest im Wesentlichen senkrecht zu einer, insbesondere der zuvor bereits genannten, Rotationsachse des Freilaufs verläuft. Unter "im Wesentlichen senkrecht" kann eine Ausrichtung einer Richtung relativ zu einer Bezugsrichtung verstanden werden, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Die Klemmelementeinheit ist vorzugsweise zumindest teilweise, bevorzugt zumindest im Wesentlichen vollständig, innerhalb des Kraftübertragungselements angeordnet. Darunter, dass ein Element zumindest im Wesentlichen vollständig innerhalb eines weiteren Elements angeordnet ist, soll insbesondere verstanden werden, dass das Element zu zumindest 50 %, bevorzugt zu zumindest 75 %, und besonders bevorzugt zu zumindest 90 % eines Gesamtvolumens und/oder einer Gesamtmasse des Elements, innerhalb des weiteren Elements angeordnet ist. Besonders bevorzugt ist die Reibeinheit, insbesondere die Federeinheit, in zumindest einem Ausführungsbeispiel vollständig innerhalb des Kraftübertragungselements angeordnet. Alternativ ist auch denkbar, dass die Klemmelementeinheit in axialer Richtung derart versetzt zu dem Kraftübertragungselement angeordnet ist, dass zumindest die Außenverzahnung des Kraftübertragungselements und die Klemmelementeinheit frei von einer gemeinsamen Schnittebene sind, welche zumindest im Wesentlichen senkrecht zur Rotationsachse verläuft. Vorteilhaft kann eine besonders kompakte Antriebsvorrichtung mit einem besonders reaktionsschnellen bidirektionalen Freilauf zur Verfügung gestellt werden. Vorteilhaft kann einer Beschädigung, insbesondere einer Verschmutzung, der Klemmelementeinheit entgegengewirkt werden.

Eine Summe aus einem Klemmelementhaltekörperwinkel und einem Federwinkel ist vorzugsweise kleiner als ein Hülsenfreiwinkel oder gleich dem Hülsenfreiwinkel. Der Klemmelementhaltekörperwinkel ist insbesondere durch eine Summe aus einem Klemmelementhaltekörperfreiwinkel und einem Klemmelementhaltekörperbelastungswinkel gebildet. Der Klemmelementhaltekörperwinkel beträgt vorzugsweise maximal 2,5°. Besonders bevorzugt beträgt der Klemmelementhaltekörperwinkel im Wesentlichen 1,8°. Alternativ ist jedoch auch denkbar, dass der Klemmelementhaltekörperwinkel größer ist als 2,5°. Der Klemmelementhaltekörperfreiwinkel entspricht insbesondere dem maximalen Bewegungswinkel, insbesondere Translationswinkel, des Wälzkörpers relativ zum Klemmelementhaltekörper um die Rotationsachse des Freilaufs. Der Klemmelementhaltekörperbelastungswinkel ist insbesondere eine Summe aus einem mechanischen Klemmelementhaltekörperbelastungswinkel und einem chemischen und/oder thermischen Klemmelementhaltekörperbelastungswinkel. Der Klemmelementhaltekörperbelastungswinkel beträgt vorzugsweise maximal 1°. Besonders bevorzugt beträgt der Klemmelementhaltekörperbelastungswinkel im Wesentlichen 0,8°. Alternativ ist jedoch auch denkbar, dass der Klemmelementhaltekörperbelastungswinkel größer ist als 1°. Der mechanische Klemmelementhaltekörperbelastungswinkel ist insbesondere abhängig von möglichen mechanischen Deformationen bezüglich des Klemmelementhaltekörpers im Betrieb der Klemmelementeinheit. Der mechanische Klemmelementhaltekörperbelastungswinkel beträgt vorzugsweise maximal 0,7°. Besonders bevorzugt beträgt der mechanische Klemmelementhaltekörperbelastungswinkel im Wesentlichen 0,5°. Alternativ ist jedoch auch denkbar, dass ein Wert des mechanischen Klemmelementhaltekörperbelastungswinkels größer ist als 0,7°. Der chemische und/oder thermische Klemmelementhaltekörperbelastungswinkel ist insbesondere abhängig vom Klemmelementhaltekörper bezüglich einer möglichen thermischen Ausdehnung, eines möglichen Aufquellens des Materials, beispielsweise durch Feuchtigkeitsaufnahme, oder dergleichen. Der chemische und/oder thermische Klemmelementhaltekörperbelastungswinkel beträgt vorzugsweise maximal 0,5°. Besonders bevorzugt beträgt der der chemische und/oder thermische Klemmelementhaltekörperbelastungswinkel im Wesentlichen 0,3°. Alternativ ist jedoch auch denkbar, dass ein Wert des chemischen und/oder thermischen Klemmelementhaltekörperbelastungswinkels größer ist als 0,5°. Der Hülsenfreiwinkel entspricht vorzugsweise dem maximalen Winkel zwischen der Klemmposition des zumindest einen Wälzkörpers und der maximalen Freidrehposition des zumindest einen Wälzkörpers. Eine Summe aus dem Hülsenfreiwinkel und einem Hülsenbelastungswinkel ergibt insbesondere einen Hülsenwinkel. Der Hülsenwinkel beträgt vorzugsweise maximal 6,5°, bevorzugt maximal 3,5°. Besonders bevorzugt beträgt der Hülsenwinkel im Wesentlichen 3,3°. Alternativ ist jedoch auch denkbar, dass der Hülsenwinkel größer ist als 6,5°. Der Hülsenbelastungswinkel ist vorzugsweise zumindest abhängig von einer möglichen Verformung und/oder Aufdehnung des Kraftübertragungselements, insbesondere der Hülse, bevorzugt der zumindest einen Klemmfläche, im Betrieb der Klemmelementeinheit. Der Hülsenbelastungswinkel beträgt vorzugsweise maximal 4°, bevorzugt maximal 2°. Ganz besonders bevorzugt beträgt der Hülsenbelastungswinkel zumindest im Wesentlichen 2,5°. Alternativ ist jedoch auch denkbar, dass der Hülsenbelastungswinkel einen Wert aufweist, der größer ist als 4°. Der Federwinkel ist insbesondere eine Summe aus einem Federfreiwinkel und einem Federbelastungswinkel. Der Federwinkel beträgt vorzugsweise maximal 0,1°. Besonders bevorzugt beträgt der Federwinkel im Wesentlichen 0,05°. Alternativ ist jedoch auch denkbar, dass der Federwinkel größer ist als 0,1 °. Der Federfreiwinkel bezieht sich insbesondere auf ein mögliches Spiel in der Verbindung zwischen dem Klemmelementhaltekörper und der Federeinheit, insbesondere dem zumindest einen Federelement. Der Federbelastungswinkel ist insbesondere abhängig von einer möglichen Verbiegung des zumindest einen Federelements. Der Federbelastungswinkel beträgt vorzugsweise maximal 0,1°. Besonders bevorzugt beträgt der Federbelastungswinkel im Wesentlichen 0,05°. Alternativ ist jedoch auch denkbar, dass der Federbelastungswinkel größer ist als 1°. Vorteilhaft kann eine besonders zuverlässige Funktion der Klemmelementeinheit für den bidirektionalen Freilauf realisiert werden.

Die Vorspanneinheit ist vorzugsweise dazu vorgesehen, den Klemmelementhaltekörper relativ zu dem Kraftübertragungselement, insbesondere relativ zu der Ausnehmung, und/oder relativ zu der Reibeinheit in zumindest einer definierten Position zu halten oder zu bringen. Die Vorspanneinheit ist vorzugsweise dazu vorgesehen, den bidirektionalen Freilauf, insbesondere wenn sich die Welle bezüglich der Vorwärtsdrehrichtung rückwärts dreht, aktivierbar bzw. deaktivierbar zu machen. Vorzugsweise definiert die Vorspanneinheit eine bidirektionale Position und eine unidirektionale Position des Klemmelementhaltekörpers relativ zu dem Kraftübertragungselement, insbesondere relativ zu der Ausnehmung, und/oder relativ zu der Reibeinheit. In der bidirektionalen Position ist der Klemmelementhaltekörper relativ zu der Ausnehmung derart angeordnet, dass das Klemmelement, insbesondere der Wälzkörper, bei einer Bewegung in Richtung der Klemmflächen aufgrund eines vorzeitigen Anschlags des Klemmelements an eine den Aufnahmebereich begrenzende Wandung des Klemmelementhaltekörpers von einem Einklemmen zwischen den Klemmflächen abgehalten wird. In der bidirektionalen Position des Klemmelementhaltekörpers wird vorzugsweise eine Drehmomentübertragung zwischen dem Kraftübertragungselement und der Welle bei einer bezüglich der Vorwärtsdrehrichtung rückwärtigen Drehung der Welle verhindert. In der unidirektionalen Position ist der Klemmelementhaltekörper relativ zu der Ausnehmung derart angeordnet, dass das Klemmelement, insbesondere der Wälzkörper, bei einer Bewegung in Richtung der Klemmflächen von einer den Aufnahmebereich begrenzenden Wandung des Klemmelementhaltekörpers beabstandet bleibt, sodass ein Einklemmen des Klemmelements zwischen den Klemmflächen möglich ist. In der unidirektionalen Position des Klemmelementhaltekörpers wird vorzugsweise eine Drehmomentübertragung zwischen dem Kraftübertragungselement und der Welle bei einer bezüglich der Vorwärtsdrehrichtung rückwärtigen Drehung der Welle ermöglicht. Eine Aktivierung oder Deaktivierung des bidirektionalen Freilaufs erfolgt vorzugsweise über eine Bewegung des Kraftübertragungselements. Eine auszuführende Bewegung des Kraftübertragungselements zur Aktivierung oder Deaktivierung des bidirektionalen Freilaufs hängt insbesondere von dem Betriebszustand vor einem Wechsel zu einer bezüglich der Vorwärtsdrehrichtung rückwärtigen Drehung der Welle ab.

Die Vorspanneinheit ist vorzugsweise an dem Klemmelementhaltekörper angeordnet. Die Vorspanneinheit stützt sich zur Ausübung einer Kraft auf den Klemmelementhaltekörper vorzugsweise an dem Kraftübertragungselement, der Reibeinheit und/oder dem Gehäusebauteil ab. Die Vorspanneinheit kann mit dem Klemmelementhaltekörper und/oder dem Kraftübertragungselement, der Reibeinheit oder dem Gehäusebauteil insbesondere stoffschlüssig verbunden, insbesondere verschweißt, sein, einteilig ausgebildet sein oder form- und/oder kraftschlüssig an diesen befestigt sein. Die Vorspanneinheit ist vorzugsweise elastisch ausgebildet, beispielsweise aufgrund einer Formgebung und/oder einem Material der Vorspanneinheit. Insbesondere ist die Vorspanneinheit derart ausgelegt, dass in zumindest einem Betriebszustand der Antriebsvorrichtung die Vorspanneinheit einer Relativbewegung des Klemmelementhaltekörpers bezüglich des Kraftübertragungselements und/oder der Reibeinheit entgegenwirkt.

Durch die erfindungsgemäße Ausgestaltung kann vorteilhaft ein bidirektionaler Freilauf mit einem gesamt angeforderten Rollenfreilauf kombiniert werden und insbesondere situationsabhängig zwischen einer und keiner Drehmomentübertragung bei einer Rückwärtsbewegung der Welle gewählt werden. Ferner kann eine Position des Klemmelements im Voraus für vorteilhaft viele Situationen und/oder Betriebswechsel bestimmt werden. Insbesondere ergeben sich vorteilhaft wenige Situationen, an welchen eine Position des Klemmelements unbekannt ist. Insbesondere nimmt das Klemmelement während des Freilaufs, kurz vor einer Drehmomentübertragung eine definierte Position ein, sodass ein vorteilhaft geringes Schlupfrisiko besteht. Insbesondere kann ein Zurückrollen des Elektrofahrrads an einem Hang vorteilhaft zuverlässig verhindert werden, da die Vorspanneinheit bereits ein Kräftegleichgewicht für eine Drehmomentübertrag herstellt und das Klemmelements vorteilhaft früh eingeklemmt wird.

Weiter wird vorgeschlagen, dass die Klemmelementeinheit zumindest eine, insbesondere die bereits genannte, mechanische Steuereinheit umfasst, wobei die Steuereinheit eine, insbesondere die bereits genannte, Reibeinheit, die zu einer Erzeugung einer, insbesondere der bereits genannten, Stellkraft vorgesehen ist, umfasst und wobei die Steuereinheit die zumindest eine Vorspanneinheit umfasst. Die Vorspannkraft ist vorzugsweise eine zusätzliche Kraft zu der Stellkraft. Vorzugsweise wirken die Stellkraft und die Vorspannkraft zusammen, um den Klemmelementhaltekörper in eine definierte Position zu bringen und/oder zu halten. Die Vorspannkraft und die Stellkraft haben vorzugsweise unterschiedliche Angriffspunkte an dem Klemmelementhaltekörper. Die Vorspannkraft ist vorzugsweise dazu vorgesehen, die Stellkraft zu modifizieren, insbesondere richtungsabhängig zu machen. Die Stellkraft für sich genommen ist als Reibungskraft typischerweise richtungsunspezifisch. Die Vorspannkraft ist vorzugsweise dazu vorgesehen, die Stellkraft in eine Verstärkungsrichtung zu unterstützen und in einer Hemmrichtung zu schwächen. Die Verstärkungsrichtung ist beispielsweise zumindest im Wesentlichen parallel oder antiparallel zur Vorwärtsdrehrichtung. Die Hemmrichtung ist beispielsweise zumindest im Wesentlichen antiparallel oder parallel zur Vorwärtsdrehrichtung. Durch die erfindungsgemäße Ausgestaltung kann eine Position des Klemmelements und/oder des Klemmelementhaltekörpers bei Wechseln zwischen unterschiedlichen Betriebszuständen der Antriebsvorrichtung vorteilhaft zuverlässig bestimmt werden.

Weiter wird vorgeschlagen, dass die Reibeinheit und die Vorspanneinheit derart angeordnet sind, dass eine Stellrichtung der Reibeinheit und eine Wirkrichtung der Vorspannkraft vorzugsweise quer, insbesondere zumindest im Wesentlichen senkrecht, zueinander ausgerichtet sind. Die Stellrichtung wird vorzugsweise von der Federeinheit der Reibeinheit vorgegeben. Die Stellrichtung verläuft vorzugsweise zumindest im Wesentlichen senkrecht zur Stellkraft, insbesondere zumindest im Wesentlichen parallel zur radialen Richtung der Antriebsvorrichtung. Die Wirkrichtung der Vorspannkraft wirkt vorzugsweise zumindest im Wesentlichen parallel bzw. tangential zur Umfangsrichtung. Vorzugsweise ist die Vorspanneinheit separat, unterschiedlich und insbesondere beabstandet von der Federeinheit ausgebildet und/oder angeordnet. Durch die erfindungsgemäße Ausgestaltung kann die Vorspanneinheit vorteilhaft kompakt gehalten und insbesondere vorteilhaft präzise auf die Stellkraft abgestimmt ausgelegt werden.

Weiter wird vorgeschlagen, dass die Vorspanneinheit zumindest ein Federelement aufweist. Vorzugsweise umfasst die Vorspanneinheit mehrere Federelemente, insbesondere zumindest zwei Federelemente. Insbesondere umfasst die Vorspanneinheit für jedes oder je zwei der Federelemente der Reibeinheit ein Federelement. Alternativ ist die Anzahl der Federeinheiten der Reibeinheit unterschiedlich von der Anzahl an Federelementen der Vorspanneinheit. Die Federelemente der Vorspanneinheit sind vorzugsweise in Umfangsrichtung an verschiedenen, insbesondere gleichmäßig verteilten, Angriffspunkten des Klemmelementhaltekörpers angeordnet. Insbesondere ist die Antriebsvorrichtung in Bezug auf die Federelemente der Vorspanneinheit drehsymmetrisch ausgebildet. Alternativ umfasst die Vorspanneinheit genau ein Federelement oder die Federelemente sind an in Umfangsrichtung unregelmäßig verteilten Angriffspunkten des Klemmelementhaltekörpers angeordnet. Die Federelemente der Vorspanneinheit sind vorzugsweise baugleich ausgebildet. Alternativ umfasst die Vorspanneinheit zumindest zwei verschieden ausgebildete Federelemente. Durch die erfindungsgemäße Ausgestaltung kann die Vorspanneinheit konstruktiv vorteilhaft einfach und robust realisiert werden.

Weiter wird vorgeschlagen, dass das zumindest eine Federelement als Druckfeder ausgebildet ist. Die Druckfeder kann zylindrisch, konisch, tonnenförmig, taillenförmig oder bogenförmig ausgebildet sein. Ein Federweg der Druckfeder ist vorzugsweise zumindest im Wesentlichen parallel oder tangential zur Umfangsrichtung ausgerichtet. Alternativ weist der Federweg einen Winkel von mehr als 10° auf, aber bevorzugt von zumindest weniger als 45° auf. Die Druckfeder ist vorzugsweise an einer radialen Ausstülpung des Klemmelementhaltekörpers angeordnet. Die Druckfeder stützt sich vorzugsweise an der Kraftübertragungseinheit und/oder dem Gehäusebauteil ab. Durch die erfindungsgemäße Ausgestaltung kann die Vorspanneinheit vorteilhaft kompakt gehalten werden.

Weiter wird vorgeschlagen, dass das zumindest eine Federelement oder ein weiteres Federelement der Vorspanneinheit als Blechfeder ausgebildet ist. Die Blechfeder umfasst vorzugsweise einen Stützkörper und ein von dem Stützkörper abstehendes Federblatt. Der Stützkörper ist beispielsweise analog zu einem Stützkörper der Federeinheit der Reibeinheit ausgebildet, an dem insbesondere zwei Federelemente der Federeinheit angeordnet sind. Der Stützkörper ist vorzugsweise an dem Klemmelementhaltekörper befestigt, insbesondere von dem Klemmelementhaltekörper umspritzt, oder mit diesem einstückig ausgebildet. Der Stützkörper weist vorzugsweise eine zur radialen Richtung zumindest im Wesentlichen parallele Haupterstreckungsebene auf. Das Federblatt ist vorzugsweise an einem von dem Klemmelementhaltekörper in radialer Richtung abgewandten Ende des Stützkörpers angeordnet und erstreckt sich von dort in Richtung des Klemmelementhaltekörpers. Das Federblatt ist in Umfangsrichtung vorzugsweise zwischen dem Stützkörper und dem Kraftübertragungselement und/oder dem Gehäusebauteil angeordnet. Das Federblatt weist an einem dem Klemmelementhaltekörper zugewandten Ende vorzugsweise eine Abknickung in Richtung des Stützkörpers auf. Vorzugsweise ist die Abknickung in zumindest einem Betriebszustand der Antriebsvorrichtung dazu vorgesehen, an dem Kraftübertragungselement und/oder dem Gehäusebauteil anzustoßen. Durch die erfindungsgemäße Ausgestaltung kann die Antriebsvorrichtung vorteilhaft einfach montierbar gehalten werden.

Weiter wird vorgeschlagen, dass die Vorspanneinheit und die Reibeinheit an demselben Aufnahmebereich eines, insbesondere des bereits genannten, Klemmelementhaltekörpers der Steuereinheit angeordnet sind. Vorzugsweise weist der Klemmelementhaltekörper zumindest ein Montagestrukturelement auf, an welchem die Steuereinheit und/oder die Vorspanneinheit angeordnet ist. Der Klemmelementhaltekörper umfasst vorzugsweise einen kreisringförmigen Grundkörper, in welchem eine Vielzahl der Aufnahmebereiche angeordnet sind. Das Montagestrukturelement erstreckt sich vorzugsweise ausgehend von dem kreisringförmigen Grundkörper in radialer Richtung von dem kreisringförmigen Grundkörper weg. Das Montagestrukturelement kann als Aufnahme, insbesondere Buchse, als Fortsatz, als Führungsschiene, als Schweißfläche oder sonstige dem Fachmann als sinnvoll erscheinende Struktur ausgebildet sein, um die Steuereinheit und/oder die Vorspanneinheit an dem Klemmelementhaltekörper anzuordnen, insbesondere zu befestigen. Vorzugsweise umfasst der Klemmelementhaltekörper mehrere, insbesondere baugleiche, Montagestrukturen, welche vorzugsweise regelmäßig, insbesondere drehsymmetrisch, in Umfangsrichtung an dem kreisringförmigen Grundkörper angeordnet sind. Die Montagestruktur kann sich in Umfangsrichtung über genau einen oder mehrere Aufnahmebereiche erstrecken. Darunter, dass die Vorspanneinheit und die Reibeinheit an demselben Aufnahmebereich angeordnet sind, soll insbesondere verstanden werden, dass diese an derselben Montagestruktur angeordnet sind, insbesondere unabhängig davon über wie viele Aufnahmebereiche hinweg sich diese Montagestruktur erstreckt. Vorzugsweise umfasst die Reibeinheit und/oder die Vorspanneinheit mehrere separate baugleiche Baugruppen, mit insbesondere zumindest je einem Federelement, welche auf die unterschiedlichen Montagestrukturen verteilt sind. Vorzugsweise umfasst die Reibeinheit und die Vorspanneinheit zumindest je eine Baugruppe, die an derselben Montagestruktur angeordnet sind. Vorzugsweise ist, insbesondere bei einer Ausgestaltung der Vorspanneinheit mit Druckfedern, an jeder Montagestruktur eine Baugruppe der Reibeinheit angeordnet. Vorzugsweise ist, insbesondere bei einer Ausgestaltung der Vorspanneinheit mit zumindest einer Druckfeder, an zumindest einer, insbesondere jeder der Montagestrukturen zusätzlich eine Baugruppe der Vorspanneinheit angeordnet. Durch die erfindungsgemäße Ausgestaltung kann eine vorteilhaft homogen verteilt, insbesondere drehsymmetrische, Krafteinwirkung auf den Klemmelementgrundkörper erreicht werden. Insbesondere kann ein Risiko einer Unwucht der Antriebsvorrichtung vorteilhaft gering gehalten werden.

Weiter wird vorgeschlagen, dass die Vorspanneinheit und die Reibeinheit an unterschiedlichen Aufnahmebereichen eines, insbesondere des bereits genannten, Klemmelementhaltekörpers der Steuereinheit angeordnet sind. Vorzugsweise ist, insbesondere bei einer Ausgestaltung der Vorspanneinheit mit zumindest einer Blechfeder, an zumindest einer, insbesondere jeder, Montagestruktur entweder eine Baugruppe der Reibeinheit oder eine Baugruppe der Vorspanneinheit angeordnet. In einer speziellen Ausgestaltung umfasst die Vorspanneinheit eine Baugruppe mit einer Blechfeder an einer der Montagestrukturen, an welcher insbesondere keine Montagestruktur der Reibeinheit angeordnet ist, und zumindest eine Baugruppe mit einer Druckfeder an zumindest einer weiteren der Montagestrukturen, an welcher auch eine Baugruppe der Reibeinheit angeordnet ist. Die Anzahl an Montagestrukturen mit Baugruppen der Reibeinheit, und insbesondere ohne Baugruppen der Vorspanneinheit, und eine Anzahl an Montagestrukturen mit Baugruppen der Vorspanneinheit, und insbesondere ohne Baugruppen der Reibeinheit, kann gleich groß oder unterschiedlich sein. Durch die erfindungsgemäße Ausgestaltung kann die Antriebsvorrichtung vorteilhaft einfach montiert werden.

Weiterhin wird eine Antriebseinheit für ein Elektrofahrrad mit einer erfindungsgemäßen Antriebsvorrichtung vorgeschlagen. Die Antriebsvorrichtung ist insbesondere zumindest teilweise, vorzugsweise zumindest zum Großteil, innerhalb des Gehäuses der Antriebseinheit angeordnet. Bevorzugt sind/ist der Elektromotor und/oder das Getriebe zumindest zum Großteil innerhalb des Gehäuses angeordnet. Vorteilhaft kann eine besonders robuste und/oder langlebige Antriebseinheit zur Verfügung gestellt werden. Vorteilhaft kann die Antriebseinheit besonders schonend betrieben werden.

Ferner wird ein Elektrofahrrad mit einer erfindungsgemäßen Antriebseinheit vorgeschlagen. Die Antriebseinheit, insbesondere das Gehäuse der Antriebseinheit, ist vorzugsweise an dem Rahmen des Elektrofahrrads befestigt. Das Elektrofahrrad umfasst vorzugsweise das Umschlingungsmittel. Es ist denkbar, dass zumindest das Gehäuse der Antriebseinheit zumindest teilweise einstückig mit zumindest einem Teil des Rahmens ausgebildet ist. Vorteilhaft kann ein Elektrofahrrad mit einem besonders reaktionsschnellen bidirektionalen Freilauf zur Verfügung gestellt werden. Vorteilhaft kann eine besonders präzises Fahrverhalten, insbesondere Antriebsverhalten, realisiert werden.

Die erfindungsgemäße Antriebsvorrichtung, die erfindungsgemäße Antriebseinheit und/oder das erfindungsgemäße Elektrofahrrad sollen/soll hierbei nicht auf die oben beschriebene Anwendung und Ausführungsform beschränkt sein. Insbesondere können/kann die erfindungsgemäße Antriebsvorrichtung, die erfindungsgemäße Antriebseinheit und/oder das erfindungsgemäße Elektrofahrrad zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Elektrofahrrad mit einer erfindungsgemäßen Antriebseinheit in einer schematischen Darstellung,
- Fig. 2: eine vereinfachte schematische Darstellung einer erfindungsgemäßen Antriebsvorrichtung der Antriebseinheit,
- Fig. 3: die Antriebseinheit in einer perspektivischen Schnittdarstellung,
- Fig. 4: die Antriebsvorrichtung in einer perspektivischen Darstellung,
- Fig. 5: die Antriebsvorrichtung in einer Explosionsdarstellung,
- Fig. 6: ein Federelement der Antriebsvorrichtung und
- Fig. 7: einen Ausschnitt einer erfindungsgemäßen Antriebsvorrichtung einer alternativen Ausführung in einer schematischen Darstellung.

### Beschreibung der Ausführungsbeispiele

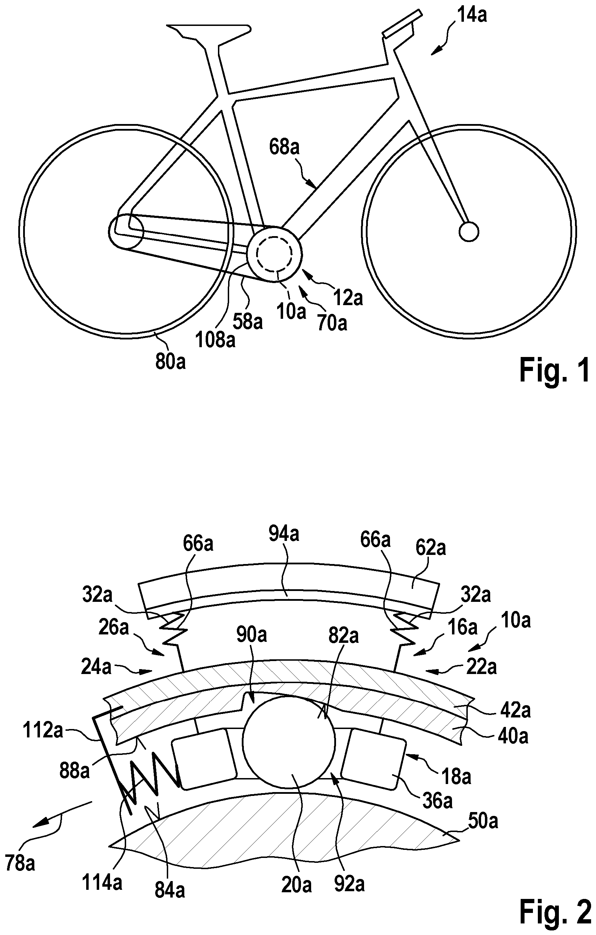

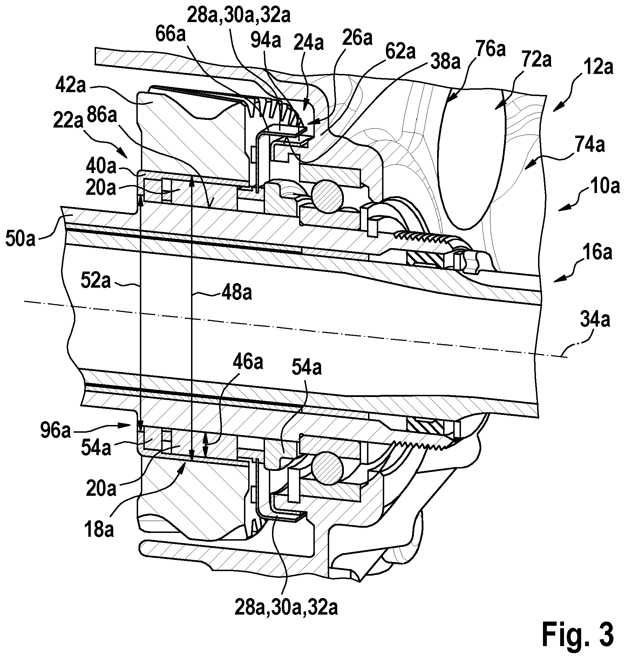

Figur 1 zeigt ein Elektrofahrrad 14a. Das Elektrofahrrad 14a weist einen Rahmen 68a auf. Das Elektrofahrrad 14a umfasst eine Antriebseinheit 12a. Die Antriebseinheit 12a ist an dem Rahmen 68a angeordnet. Die Antriebseinheit 12a ist in einem Tretlagerbereich 70a des Elektrofahrrads 14a angeordnet. Die Antriebseinheit 12a umfasst ein Gehäuse 72a (vgl. Figur 3). Die Antriebseinheit 12a umfasst einen Elektromotor 74a. Die Antriebseinheit 12a umfasst ein Getriebe 76a zur Übertragung einer Antriebskraft der Antriebseinheit 12a, insbesondere des Elektromotors 74a, an ein Abtriebsritzel 108a der Antriebseinheit 12a. Das Abtriebsritzel 108a ist als ein Kettenblatt oder dergleichen ausgebildet. Das Abtriebsritzel 108a ist mit einem Getriebeausgang des Getriebes 76a verbunden.

Die Antriebseinheit 12a umfasst zumindest eine Antriebsvorrichtung 10a. Die Antriebsvorrichtung 10a ist zumindest teilweise, vorzugsweise zumindest zum Großteil, innerhalb des Gehäuses 72a angeordnet. Figur 2 zeigt in einem vereinfachten Schema den Aufbau der Antriebsvorrichtung 10a. Die Antriebsvorrichtung 10a weist einen bidirektionalen Freilauf 16a auf. Der Freilauf 16a ist als ein kraftschlussbasierter Freilauf ausgebildet. Der Freilauf 16a ist verschieden von einem Sperrklinkenfreilauf ausgebildet. Der Freilauf 16a weist zumindest eine Klemmelementeinheit 18a auf. Die Klemmelementeinheit 18a ist als eine Klemmrolleneinheit ausgebildet. Alternativ ist jedoch auch denkbar, dass die Klemmelementeinheit 18a als eine Klemmkörpereinheit oder als eine Klemmkugeleinheit ausgebildet ist. Die Klemmelementeinheit 18a ist an dem Getriebeausgang der Antriebseinheit 12a angeordnet. Alternativ ist auch denkbar, dass die Klemmelementeinheit 18a an einer anderen Position innerhalb des Getriebes 76a angeordnet ist.

Die Antriebseinheit 12a umfasst zumindest eine Tretkurbelwelle (hier nicht dargestellt). Die Tretkurbelwelle ist über Pedale durch einen Nutzer antreibbar. Das Abtriebsritzel 108a ist derart mit der Tretkurbelwelle verbunden, dass das Abtriebsritzel 108a durch eine Drehung der Tretkurbelwelle antreibbar ist, insbesondere zumindest in einer Drehrichtung, bevorzugt in Richtung einer Vorwärtsdrehrichtung 78a der Antriebsvorrichtung 10a. Die Vorwärtsdrehrichtung 78a entspricht einer Vorwärtsbewegung des Elektrofahrrads 14a. Es ist denkbar, dass eine Welle 50a drehbar gelagert mit der Tretkurbelwelle verbunden ist. Zusätzlich ist denkbar, dass die Antriebseinheit 12a einen weiteren Freilauf (hier nicht dargestellt) aufweist, welcher zwischen der Welle 50a und der Tretkurbelwelle angeordnet ist. Der weitere Freilauf ist vorzugsweise dazu vorgesehen, ein Mitdrehen der Tretkurbelwelle bei drehender Welle 50a zu verhindern. Alternativ ist denkbar, dass die Welle 50a drehfest mit der Tretkurbelwelle verbunden ist. Insbesondere ist alternativ denkbar, dass die Welle 50a einstückig mit der Tretkurbelwelle ausgebildet ist. Ferner ist alternativ denkbar, dass die Welle 50a der Tretkurbelwelle entspricht.

Die Antriebsvorrichtung 10a umfasst zumindest ein Kraftübertragungselement 42a zur Übertragung einer Antriebskraft der Antriebseinheit 12a. Die Klemmelementeinheit 18a ist an dem Kraftübertragungselement 42a angeordnet. Das Kraftübertragungselement 42a ist als ein Stirnrad ausgebildet. Das Stirnrad weist eine Außenverzahnung auf. Es ist denkbar, dass die Außenverzahnung als eine Geradverzahnung oder als eine Schrägverzahnung ausgebildet ist. Alternativ ist jedoch auch denkbar, dass das Kraftübertragungselement 42a als ein Planetenrad, als ein Hohlrad, als ein Sonnenrad oder als ein anderes, einem Fachmann als sinnvoll erscheinendes Kraftübertragungselement 42a ausgebildet ist. Das Kraftübertragungselement 42a bildet den Getriebeausgang der Antriebseinheit 12a. Alternativ ist jedoch auch denkbar, dass das Kraftübertragungselement 42a innerhalb des Getriebes 76a angeordnet ist und insbesondere zu einer Kraftübertragung auf eine Zwischenwelle des Getriebes 76a vorgesehen ist.

Die Antriebsvorrichtung 10a umfasst zumindest die Welle 50a. Die Welle 50a ist als eine Abtriebswelle ausgebildet. Alternativ ist jedoch auch denkbar, dass die Welle 50a als eine Zwischenwelle, welche insbesondere innerhalb des Getriebes 76a angeordnet ist, oder dergleichen ausgebildet ist. Das Abtriebsritzel 108a ist drehfest mit der Welle 50a verbunden. Es ist denkbar, dass das Abtriebsritzel 108a einstückig mit der Welle 50a ausgebildet ist.

Der Freilauf 16a weist eine Rotationsachse 34a auf. Die Welle 50a und das Kraftübertragungselement 42a sind koaxial um die Rotationsachse 34a angeordnet (vgl. auch Figuren 3, 4 und 5). Die Welle 50a, die Tretkurbelwelle und/oder das Kraftübertragungselement 42a sind/ist um die Rotationsachse 34a drehbar gelagert. Durch eine Drehung der Welle 50a um die Rotationsachse 34a ist ein Drehmoment am Abtriebsritzel 108a erzeugbar. Die Klemmelementeinheit 18a ist dazu eingerichtet, eine Übertragung eines bezüglich der Vorwärtsrichtung des Elektrofahrrads 14a vorwärts gerichteten Motordrehmoments auf die Welle 50a, insbesondere das Abtriebsritzel 108a, zu unterbrechen, wenn eine Drehzahl der Welle 50a größer ist als eine Drehzahl des durch das Motordrehmoment angetriebenen Kraftübertragungselements 42a. Die Klemmelementeinheit 18a ist dazu eingerichtet, eine Übertragung eines bezüglich der Vorwärtsrichtung des Elektrofahrrads 14a rückwärts gerichteten Motordrehmoments auf die Welle 50a, insbesondere das Abtriebsritzel 108a, zu unterbrechen, wenn die Drehzahl der Welle 50a, insbesondere des Abtriebsritzels 108a, größer ist als die Drehzahl des durch das Motordrehmoment angetriebenen Kraftübertragungselements 42a. Die Klemmelementeinheit 18a ist dazu eingerichtet, eine Übertragung eines Drehmoments der Welle 50a, insbesondere des Abtriebsritzels 108a, von der Welle 50a, insbesondere dem Abtriebsritzel 108a, auf das Kraftübertragungselement 42a, vorzugsweise das Getriebe 76a und/oder den Elektromotor 74a, zu unterbrechen, wenn die Welle 50a, insbesondere das Abtriebsritzel 108a, bezüglich der Vorwärtsdrehrichtung 78a rückwärts dreht. Die Klemmelementeinheit 18a ist dazu eingerichtet, die Übertragung des Drehmoments der Welle 50a, insbesondere des Abtriebsritzels 108a, von der Welle 50a, insbesondere von dem Abtriebsritzel 108a, auf das Kraftübertragungselement 42a, vorzugsweise auf das Getriebe 76a und/oder den Elektromotor 74a, unabhängig von der Drehzahl des Kraftübertragungselements 42a und unabhängig von der Drehzahl der Welle 50a, insbesondere des Abtriebsritzels 108a, zu unterbrechen.

Die Klemmelementeinheit 18a ist zur Entkopplung von Schwingungen eines Umschlingungsmittels 58a vorgesehen. Das Umschlingungsmittel 58a ist als eine Kette ausgebildet. Alternativ ist auch denkbar, dass das Umschlingungsmittel 58a als ein Riemen oder dergleichen ausgebildet ist. Das Umschlingungsmittel 58a ist vorzugsweise drehfest mit der Abtriebswelle, insbesondere dem Abtriebsritzel 108a, verbunden. Das Umschlingungsmittel 58a ist dazu vorgesehen, eine Antriebskraft von der Welle 50a, insbesondere von dem Abtriebsritzel 108a, auf ein Antriebsrad 80a des Elektrofahrrads 14a zu übertragen. Das Antriebsrad 80a ist als ein Hinterrad des Elektrofahrrads 14a ausgebildet. Alternativ ist jedoch auch denkbar, dass das Antriebsrad 80a als ein Vorderrad des Elektrofahrrads 14a ausgebildet ist. Die Klemmelementeinheit 18a ist dazu vorgesehen, einer Übertragung von Schwingungen des Umschlingungsmittels 58a auf Bauteile der Antriebseinheit 12a, welche ausgehend vom Umschlingungsmittel 58a im Antriebsstrang hinter der Klemmelementeinheit 18a angeordnet sind, entgegenzuwirken. Die Klemmelementeinheit 18a ist dazu vorgesehen, einer Übertragung von Schwingungen des Umschlingungsmittels 58a auf das Getriebe 76a und/oder den Elektromotor 74a entgegenzuwirken.

Die Klemmelementeinheit 18a umfasst eine Vielzahl an Wälzkörpern 20a (in der vereinfachten schematischen Darstellung in Figur 2 ist lediglich ein Wälzkörper 20a dargestellt). Es ist auch denkbar, dass die Klemmelementeinheit 18a lediglich einen Wälzkörper 20a umfasst. Die Wälzkörper 20a sind als Rollen ausgebildet. Alternativ ist auch denkbar, dass die Wälzkörper 20a als Kugeln, als Tonnen, als Nadeln, als Kegel oder als andere, einem Fachmann als sinnvoll erscheinende Rotationskörper ausgebildet sind. Die Wälzkörper 20a sind in einer Klemmposition der Wälzkörper 20a zu einer Drehmomentübertragung zwischen dem Kraftübertragungselement 42a und der Welle 50a vorgesehen. Die Wälzkörper 20a sind in einer Freidrehposition der Wälzkörper 20a zu einer Unterbrechung einer Drehmomentübertragung zwischen dem Kraftübertragungselement 42a und der Welle 50a vorgesehen.

Die Klemmelementeinheit 18a umfasst zumindest eine Hülse 40a. Die Hülse 40a ist an dem Kraftübertragungselement 42a angeordnet. Die Hülse 40a ist drehfest mit dem Kraftübertragungselement 42a verbunden. Es ist denkbar, dass die Hülse 40a einstückig mit dem Kraftübertragungselement 42a ausgebildet ist. Es ist auch denkbar, dass die Hülse 40a von dem Kraftübertragungselement 42a gebildet ist. Die Wälzkörper 20a sind zwischen dem Kraftübertragungselement 42a, insbesondere der Hülse 40a, und der Welle 50a angeordnet. Die Wälzkörper 20a sind gleichmäßig angeordnet. Die Wälzkörper 20a sind entlang einer Umfangsrichtung der Welle 50a, welche insbesondere in Ebene senkrecht zu der Rotationsachse 34a verläuft, gleichmäßig angeordnet.

Die Klemmelementeinheit 18a weist zumindest eine Klemmfläche 82a, vorzugsweise eine Vielzahl an Klemmflächen 82a, auf. Die Hülse 40a weist die zumindest eine Klemmfläche 82a auf. Die Klemmfläche 82a ist dazu vorgesehen, mit zumindest einem der Wälzkörper 20a zu einer Drehmomentübertragung zwischen dem Kraftübertragungselement 42a und der Welle 50a zusammenzuwirken. Die Klemmelementeinheit 18a weist zumindest eine weitere Klemmfläche 84a auf. Die weitere Klemmfläche 84a ist dazu vorgesehen, mit zumindest einem der Wälzkörper 20a zu einer Drehmomentübertragung zwischen dem Kraftübertragungselement 42a und der Welle 50a zusammenzuwirken. Die Welle 50a weist eine Kreiszylindermantelfläche 86a auf. Die weitere Klemmfläche 84a ist von der Kreiszylindermantelfläche 86a der Welle 50a gebildet. Die Hülse 40a weist eine Innenfläche 88a auf. Die Innenfläche 88a ist der Welle 50a zugewandt. Die Innenfläche 88a weist die zumindest eine Klemmfläche 84 auf. Eine Anzahl an Klemmflächen 82a entspricht der Anzahl der Wälzkörper 20a. Den Wälzkörpern 20a ist jeweils eine der Klemmflächen 82a zugeordnet.

Die Wälzkörper 20a sind jeweils dazu vorgesehen, zu einer Drehmomentübertragung zwischen dem Kraftübertragungselement 42a und der Welle 50a mit einer der Klemmflächen 82a und der weiteren Klemmflächen 84a verklemmt zu werden. Die Hülse 40a weist zumindest eine Vielzahl von Ausnehmungen 90a zur Anordnung der Wälzkörper 20a auf (in der vereinfachten schematischen Darstellung in Figur 2 ist lediglich eine Ausnehmung 90a dargestellt). Eine Anzahl von Ausnehmungen 90a entspricht einer Anzahl von Wälzkörpern 20a. In den Ausnehmungen 90a ist jeweils eine der Klemmflächen 82a angeordnet. Die Ausnehmungen 90a sind asymmetrisch ausgebildet, insbesondere zumindest betrachtet in einer Umfangsrichtung des Kraftübertragungselements 42a, welche vorzugsweise in einer Ebene liegt, die senkrecht zu der Rotationsachse 34a verläuft. Die Ausnehmungen 90a sind derart ausgebildet, dass die Wälzkörper 20a in den Ausnehmungen 90a jeweils in einer Klemmposition an der Klemmfläche 82a und in einer Freidrehposition anordenbar sind.

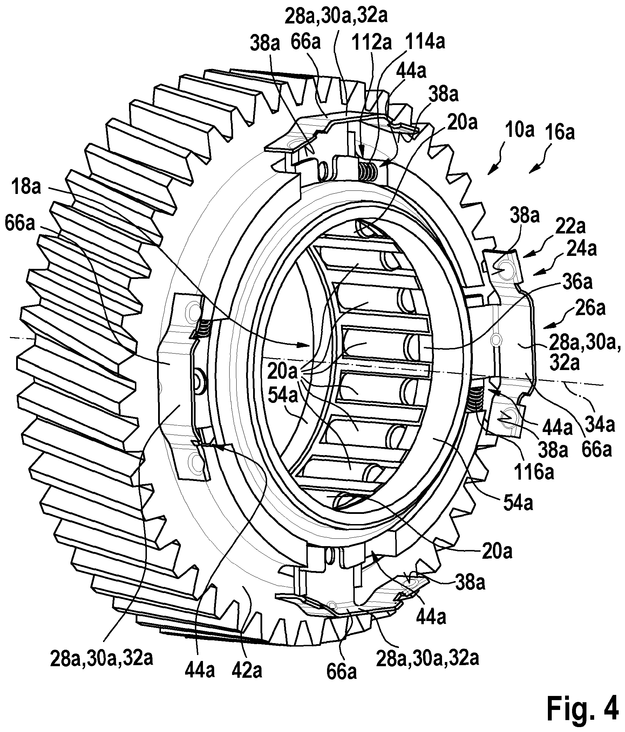

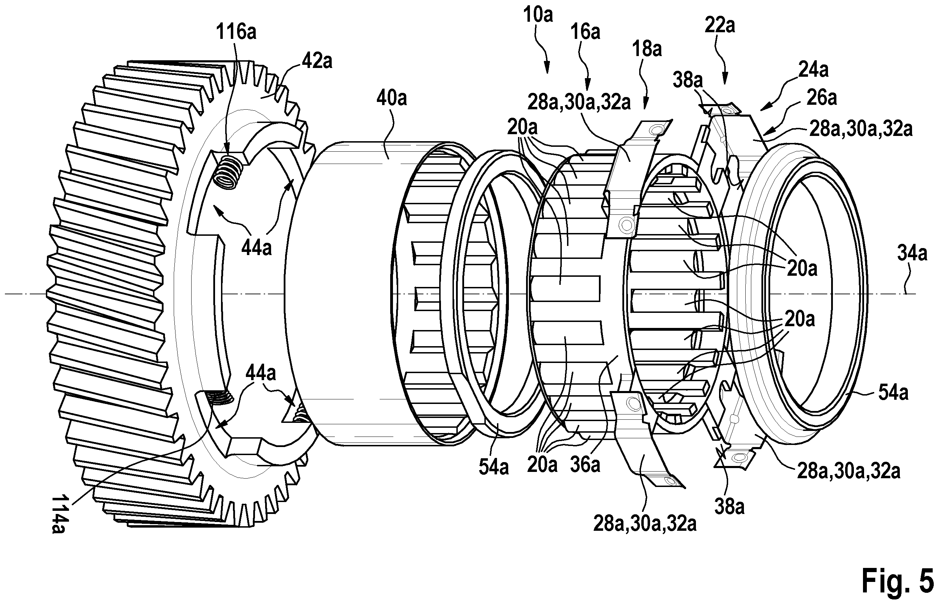

Die Klemmelementeinheit 18a umfasst zumindest einen Klemmelementhaltekörper 36a (in Figur 2 ist der Klemmelementhaltekörper 36a schematisch vereinfacht dargestellt). Der Klemmelementhaltekörper 36a weist eine Vielzahl von Aufnahmebereichen 92a für die Wälzkörper 20a auf. Der Klemmelementhaltekörper 36a ist ringförmig ausgebildet (vgl. auch Figuren 4 und 5). Der Klemmelementhaltekörper 36a ist als ein Käfigring ausgebildet. Eine Anzahl von Aufnahmebereichen 92a entspricht der Anzahl von Wälzkörpern 20a. Die Aufnahmebereiche 92a sind voneinander getrennt. Die Aufnahmebereiche 92a begrenzen eine Bewegung der Wälzkörper 20a, insbesondere um die Rotationsachse 34a, vorzugsweise in Umfangsrichtung, relativ zu dem Klemmelementhaltekörper 36a. Der Klemmelementhaltekörper 36a ist zwischen der Welle 50a und dem Kraftübertragungselement 42a, insbesondere der Hülse 40a, angeordnet. Der Klemmelementhaltekörper 36a ist relativ zu dem Kraftübertragungselement 42a, insbesondere der Hülse 40a, und/oder der Welle 50a, beweglich angeordnet. Der Klemmelementhaltekörper 36a ist dazu vorgesehen, die Wälzkörper 20a zu führen.

Die Klemmelementeinheit 18a umfasst eine mechanische Steuereinheit 22a. Die Steuereinheit 22a ist zu einem Wechsel zwischen einem Freilaufzustand und einem Drehmomentübertragungszustand des Freilaufs 16a vorgesehen. Der Freilaufzustand ist ein Zustand des Freilaufs 16a, bei dem eine Drehmomentübertragung zwischen dem Kraftübertragungselement 42a und der Welle 50a unterbrochen ist. Der Drehmomentübertragungszustand ist ein Zustand des Freilaufs 16a, bei dem eine Drehmomentübertragung zwischen dem Kraftübertragungselement 42a und der Welle 50a erfolgt. Ein Wechsel zwischen dem Freilaufzustand und dem Drehmomentübertragungszustand erfolgt mittels der Steuereinheit 22a automatisch, insbesondere frei von einem Eingriff durch einen Nutzer und/oder frei von einer elektronischen Steuerung. Die Steuereinheit 22a ist frei von elektrischen Bauteilen. Alternativ ist jedoch auch denkbar, dass die Klemmelementeinheit 18a eine elektronische Steuereinheit umfasst.

Die Steuereinheit 22a weist eine Reibeinheit 24a auf, die zu einer Erzeugung einer Stellkraft vorgesehen ist. Die Reibeinheit 24a ist dazu vorgesehen, den Klemmelementhaltekörper 36a relativ zu dem Kraftübertragungselement 42a und/oder der Welle 50a zu bewegen, insbesondere um die Rotationsachse 34a zu drehen. Die Reibeinheit 24a ist zumindest dazu vorgesehen, einen Drehmomentübertragungszustand des Freilaufs 16a, in Abhängigkeit von einer Relativbewegung des Kraftübertragungselements 42a zu der Welle 50a, zu lösen. Die Reibeinheit 24a ist zumindest dazu vorgesehen, den Freilauf 16a, in Abhängigkeit von einer Relativbewegung des Kraftübertragungselements 42a zu der Welle 50a, durch die Stellkraft von dem Drehmomentübertragungszustand des Freilaufs 16a in den Freilaufzustand des Freilaufs 16a zu schalten. Die Reibeinheit 24a ist dazu vorgesehen, die Wälzkörper 20a relativ zu dem Kraftübertragungselement 42a, insbesondere der Hülse 40a, und/oder der Welle 50a, zu positionieren, vorzugsweise um den Freilauf 16a, bevorzugt zumindest von dem Drehmomentübertragungszustand in den Freilaufzustand, zu schalten.

Die Reibeinheit 24a ist zur Erzeugung einer Reibungskraft zwischen dem Klemmelementhaltekörper 36a und einem von dem Klemmelementhaltekörper 36a getrennt ausgebildeten Reibkörper 94a vorgesehen. Der Reibkörper 94a ist ein feststehendes Bauteil des Freilaufs 16a. Der Reibkörper 94a ist als ein Reibring ausgebildet. Der Reibkörper 94a ist drehfest mit einem Gehäusebauteil 62a des Gehäuses 72a verbunden. Es ist alternativ auch denkbar, dass der Reibkörper 94a durch ein feststehendes Bauteil des Elektrofahrrads 14a, insbesondere der Antriebseinheit 12a, gebildet ist. Der Reibkörper 94a ist alternativ beispielsweise durch das Gehäusebauteil 62a, durch ein Rahmenelement des Rahmens 68a oder dergleichen ausgebildet. Durch die Reibeinheit 24a ist ein Reibkontakt zwischen dem Klemmelementhaltekörper 36a und dem Reibkörper 94a gebildet. Die Reibeinheit 24a weist eine Vielzahl von Reibelementen 66a auf (in der vereinfachten schematischen Darstellung in Figur 2 sind lediglich zwei Reibelemente 66a dargestellt). Die Reibeinheit 24a weist vier Reibelemente 66a auf. Es ist alternativ auch denkbar, dass die Reibeinheit 24a eine Anzahl von Reibelementen 66a aufweist, die verschieden ist von vier, beispielsweise ein Reibelement 66a, zwei Reibelemente 66a, drei Reibelemente 66a oder mehr als vier Reibelemente 66a. Die Reibelemente 66a sind zur Bildung des Reibkontakts zwischen dem Klemmelementhaltekörper 36a und dem Reibkörper 94a vorgesehen. Die Reibelemente 66a sind in Umfangsrichtung des Klemmelementhaltekörpers 36a, welche insbesondere in einer Ebene senkrecht zu der Rotationsachse 34a verläuft, angeordnet.

Die Reibelemente 66a weisen jeweils zwei Reibflächen 38a zur Bildung des Reibkontakts zwischen dem Klemmelementhaltekörper 36a und dem Reibkörper 94a auf. Alternativ ist auch denkbar, dass die Reibelemente 66a jeweils lediglich eine Reibfläche 38a oder mehr als zwei Reibflächen 38a aufweisen. Alternativ ist jedoch auch denkbar, dass die Reibelemente 66a ungleichmäßig in Umfangsrichtung, vorzugsweise an dem Klemmelementhaltekörper 36a oder dem Reibkörper 94a, angeordnet sind. Die Reibelemente 66a sind an dem Klemmelementhaltekörper 36a befestigt. Die Reibelemente 66a sind einstückig mit dem Klemmelementhaltekörper 36a ausgebildet.

Die Stellkraft ist eine Reibungskraft. Die Reibeinheit 24a ist dazu vorgesehen, in zumindest einem Betriebszustand des Freilaufs 16a die Stellkraft durch Haft- und/oder Gleitreibung zwischen dem Klemmelementhaltekörper 36a und dem Reibkörper 94a zu erzeugen. Die Stellkraft, insbesondere die Reibungskraft, wirkt zumindest in dem Betriebszustand des Freilaufs 16a entgegen einem am Klemmelementhaltekörper 36a anliegenden Drehmoment. Die Stellkraft, vorzugsweise die Reibungskraft, ist dazu vorgesehen, eine Drehung des Klemmelementhaltekörpers 36a um die Rotationsachse 34a relativ zu der Welle 50a zu verzögern, insbesondere zumindest in dem Freilaufzustand.

Die Antriebsvorrichtung 10a umfasst zumindest eine Lagereinheit 96a (vgl. Figur 3), welche zumindest teilweise zwischen dem Kraftübertragungselement 42a, insbesondere der Hülse 40a, und der Welle 50a angeordnet ist. Die Lagereinheit 96a ist zumindest dazu vorgesehen, das Kraftübertragungselement 42a und die Welle 50a gegeneinander drehbar und/oder in einem festen radialen Abstand relativ zueinander zu lagern. Die Lagereinheit 96a umfasst zumindest zwei Lagerelemente 54a. Alternativ ist auch denkbar, dass die Lagereinheit 96a lediglich ein Lagerelement 54a oder mehr als zwei Lagerelemente 54a umfasst. Die Lagerelemente 54a sind als Gleitlagerringe ausgebildet. Die Lagerelemente 54a sind zwischen dem Kraftübertragungselement 42a, insbesondere der Hülse 40a, und der Welle 50a angeordnet.

Die Klemmelementeinheit 18a ist dazu eingerichtet, die Wälzkörper 20a in den Ausnehmungen 90a mittels der jeweiligen Klemmfläche 82a zu verklemmen, wenn die Drehzahl des Kraftübertragungselements 42a in Vorwärtsdrehrichtung 78a größer ist als oder gleich groß ist wie die Drehzahl der Welle 50a. Die Reibeinheit 24a ist bei einer Drehung des Kraftübertragungselements 42a in Vorwärtsdrehrichtung 78a, wobei eine Drehzahl des Kraftübertragungselements 42a größer ist als eine Drehzahl der Welle 50a, dazu vorgesehen, mittels der Stellkraft, insbesondere der Reibungskraft, den Klemmelementhaltekörper 36a relativ zu dem Kraftübertragungselement 42a zu bremsen, um die Wälzkörper 20a mit den Klemmflächen 82a in den Ausnehmungen 90a der Hülse 40a in Kontakt zu bringen und zu verklemmen. Die Klemmelementeinheit 18a ist dazu vorgesehen, über die Stellkraft, insbesondere die Reibungskraft, bei einer bezüglich der Vorwärtsdrehrichtung 78a rückwärts gerichteten Drehrichtung der Welle 50a eine Kraft auf die Wälzkörper 20a zu erzeugen, um die Wälzkörper 20a von den Klemmflächen 82a zu lösen, so dass der Freilauf 16a in den Freilaufzustand geschaltet ist. Durch die Stellkraft, insbesondere die Reibungskraft, ist eine Verklemmung der Wälzkörper 20a mit dem Kraftübertragungselement 42a, insbesondere der Hülse 40a, und der Welle 50a erzeugbar, wenn die Drehzahl des Kraftübertragungselements 42a größer ist als die Drehzahl der Welle 50a, vorzugsweise zumindest bei einer bezüglich der Vorwärtsdrehrichtung 78a vorwärts gerichteten Drehung des Kraftübertragungselements 42a. Durch die Verklemmung der Wälzkörper 20a mit dem Kraftübertragungselement 42a, insbesondere der Hülse 40a, und der Welle 50a ist ein Drehmoment zwischen dem Kraftübertragungselement 42a und der Welle 50a übertragbar.

Die Wälzkörper 20a sind in dem Drehmomentübertragungszustand drehfest mit dem Kraftübertragungselement 42a, insbesondere der Hülse 40a, und der Welle 50a verbunden. Die Wälzkörper 20a befinden sich insbesondere in der Klemmposition, wenn sich der Freilauf 16a in dem Drehmomentübertragungszustand befindet. Die Wälzkörper 20a sind in dem Freilaufzustand freidrehend in den Ausnehmungen 90a angeordnet. Die Wälzkörper 20a befinden sich insbesondere in der Freidrehposition, wenn sich der Freilauf 16a in dem Freilaufzustand befindet. Die Wälzkörper 20a sind in den Ausnehmungen 90a jeweils freidrehend angeordnet, wenn die Welle 50a bezüglich der Vorwärtsdrehrichtung 78a rückwärts dreht. Die Wälzkörper 20a sind in den Ausnehmungen 90a jeweils freidrehend angeordnet, wenn die Welle 50a bezüglich der Vorwärtsdrehrichtung 78a vorwärts dreht und die Drehzahl der Welle 50a größer ist als die Drehzahl des Kraftübertragungselements 42a. Die Wälzkörper 20a sind in den Ausnehmungen 90a jeweils freidrehend angeordnet, wenn das Kraftübertragungselement 42a bezüglich der Vorwärtsdrehrichtung 78a rückwärts dreht. Die Klemmelementeinheit 18a ist dazu vorgesehen, die Wälzkörper 20a mittels des Klemmelementhaltekörpers 36a aus der Verklemmung zu lösen, wenn die Drehzahl der Welle 50a größer ist als die Drehzahl des Kraftübertragungselements 42a.

Die Klemmelementeinheit 18a umfasst zumindest eine Vorspanneinheit 112a, die zu einer Erzeugung einer Vorspannkraft vorgesehen ist. Die Steuereinheit 22a umfasst die zumindest eine Vorspanneinheit 112a zusätzlich zu der Reibeinheit 24a. Die Reibeinheit 24a und die Vorspanneinheit 112a sind derart angeordnet, dass eine Stellrichtung der Reibeinheit 24a und eine Wirkrichtung der Vorspannkraft vorzugsweise quer, insbesondere zumindest im Wesentlichen senkrecht, zueinander ausgerichtet sind. Die Vorspanneinheit 112a ist vorzugsweise an dem Klemmelementhaltekörper 36a angeordnet. Die Vorspanneinheit 112a ist beispielsweise an dem Kraftübertragungselement 42a angeordnet. Die Vorspanneinheit 112a umfasst vorzugsweise zumindest ein Federelement 114a, welches an dem Klemmelementhaltekörper 36a zu einer Ausübung einer Federkraft in oder entgegen der Vorwärtsdrehrichtung 78a angreift. Das Federelement 114a greift den Klemmelementhaltekörper 36a in Umfangsrichtung vorzugsweise auf einer der Ausnehmung 90a zugewandten Seite, und insbesondere auf einer der Klemmfläche 82a der Hülse 40a abgewandten Seite, an dem Klemmelementhaltekörper 36a an.

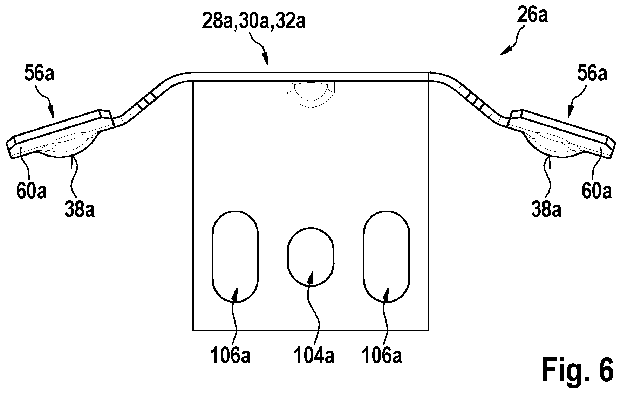

Die Reibeinheit 24a umfasst zumindest eine Federeinheit 26a. Der Klemmelementhaltekörper 36a ist über die Federeinheit 26a mit dem Reibkörper 94a verbunden. Die Federeinheit 26a ist dazu vorgesehen, eine Haltekraft zwischen dem Klemmelementhaltekörper 36a und dem Reibkörper 94a zu erzeugen. Die Federeinheit 26a ist dazu vorgesehen, die Stellkraft, insbesondere die Reibungskraft, der Reibeinheit 24a zu erzeugen. Die Federeinheit 26a weist vier Federelemente 32a auf (vgl. Figuren 4 und 5). Alternativ ist jedoch auch denkbar, dass die Federeinheit 26a eine Anzahl an Federelementen 32a aufweist, die verschieden ist von vier, beispielsweise lediglich ein Federelement 32a, zwei Federelemente 32a, drei Federelemente 32a oder mehr als vier Federelemente 32a. Die Reibelemente 66a sind durch die Federelemente 32a gebildet. Die Federelemente 32a sind als Biegefedern 28a ausgebildet. Alternativ ist auch denkbar, dass die Federelemente 32a als Torsionsfedern, als Tellerfedern, als Evolutfedern, als Ringfedern oder dergleichen ausgebildet sind. Ferner ist alternativ auch denkbar, dass die Federelemente 32a als gummielastische Elemente ausgebildet sind. Die Federelemente 32a sind an dem Klemmelementhaltekörper 36a angeordnet. Die Federelemente 32a sind zwischen dem Klemmelementhaltekörper 36a und dem Reibkörper 94a angeordnet. Der Klemmelementhaltekörper 36a ist über die Federelemente 32a mit dem Reibkörper 94a verbunden. Die vier Federelemente 32a weisen jeweils zwei Montagerampen 60a auf (vgl. Figur 6). Die Montagerampen 60a sind durch zu der Rotationsachse 34a abgewinkelte, vorzugsweise verschieden von senkrecht, verlaufende Flächen gebildet.

Die Biegefedern 28a sind als Blattfedern 30a ausgebildet. Alternativ ist auch denkbar, dass die Biegefedern 28a als Drahtfedern, als Nadelfedern, als Schenkelfedern oder dergleichen ausgebildet sind. Vorzugsweise ist die Federeinheit 26a frei von Schraubenfedern ausgebildet. Die Blattfedern 30a sind als zumindest zweiflüglige Blattfedern ausgebildet. Alternativ ist jedoch auch denkbar, dass die Blattfedern 30a als einflüglige Blattfedern, als Spiralfedern, als Prellfedern, als Elliptikfedern, als Parabelfedern, als Wellenfedern oder als andere, einem Fachmann als sinnvoll erscheinende Blattfedern 30a ausgebildet sind. Die Blattfedern 30a weisen jeweils zwei Federflügel 56a auf (vgl. Figur 6). Die Reibflächen 38a der Reibelemente 66a sind jeweils an den Federflügeln 56a angeordnet.

Die Wälzkörper 20a sind federfrei am Klemmelementhaltekörper 36a angeordnet. Die Aufnahmebereiche 92a für die Wälzkörper 20a sind frei von Federelementen. Insbesondere ist ein Bereich zwischen den Wälzkörpern 20a und dem Klemmelementhaltekörper 36a, vorzugsweise zumindest in dem jeweiligen Aufnahmebereich 92a, frei von Federelementen. Die Wälzkörper 20a sind frei von einer Lagerung an dem Klemmelementhaltekörper 36a mittels Federelementen.

Die Federelemente 32a sind an dem Klemmelementhaltekörper 36a befestigt. Die Federelemente 32a sind aus einem Material gebildet, welches verschieden ist von einem Material, aus welchem der Klemmelementhaltekörper 36a gebildet ist. Die Federelemente 32a sind aus Metall gebildet. Alternativ ist jedoch auch denkbar, dass die Federelemente 32a aus einem Kunststoff oder einem anderen, einem Fachmann als sinnvoll erscheinenden Material gebildet sind. Der Klemmelementhaltekörper 36a ist aus einem Kunststoff gebildet. Alternativ ist jedoch auch denkbar, dass der Klemmelementhaltekörper 36a aus einem Metall oder einem anderen, einem Fachmann als sinnvoll erscheinenden Material gebildet ist. Alternativ ist jedoch auch denkbar, dass die Federelemente 32a und der Klemmelementhaltekörper 36a aus einem identischen Material ausgebildet sind.

Die Federelemente 32a sind einstückig mit dem Klemmelementhaltekörper 36a ausgebildet. Die Federelemente 32a sind von dem Klemmelementhaltekörper 36a umspritzt. Die Federelemente 32a sind von dem Klemmelementhaltekörper 36a zumindest teilweise umspritzt.

Die Federelemente 32a weisen jeweils zwei Verbindungselemente 106a auf, um die Federelemente 32a mit dem Klemmelementhaltekörper 36a zu verbinden. Die Verbindungselemente 106a sind als Öffnungen ausgebildet. Alternativ ist jedoch auch denkbar, dass die Verbindungselemente 106a als andere, einem Fachmann als sinnvoll erscheinende Verbindungselemente 106a ausgebildet sind. Die Verbindungselemente 106a sind dazu vorgesehen, bei einer Herstellung der Klemmelementeinheit 18a von dem Klemmelementhaltekörper 36a durchspritzt zu werden. Die Federelemente 32a weisen jeweils ein Montageelement 104a auf. Das jeweilige Montageelement 104a ist dazu vorgesehen, eine Anordnung der Federelemente 32a an dem Klemmelementhaltekörper 36a in einer Montageposition vor einer Umspritzung zu unterstützen. Die Montageelemente 104a sind als Öffnungen ausgebildet. Alternativ ist jedoch auch denkbar, dass die Montageelemente 104a als Vorsprünge oder als andere, einem Fachmann als sinnvoll erscheinende Montageelemente 104a ausgebildet sind.

Die Reibflächen 38a der Reibeinheit 24a, insbesondere der Reibelemente 66a, erstrecken sich in axialer Richtung. Die axiale Richtung verläuft parallel zu der Rotationsachse 34a. Die Reibflächen 38a sind zumindest teilweise gekrümmt. Alternativ oder zusätzlich ist denkbar, dass die Reibflächen 38a zumindest teilweise geradlinig verlaufen. Die Reibflächen 38a weisen jeweils eine Haupterstreckungsebene auf, welche zumindest im Wesentlichen parallel zu der axialen Richtung verläuft.

Die sich in axialer Richtung erstreckenden Reibflächen 38a sind betrachtet in axialer Richtung auf einer dem Klemmelementhaltekörper 36a abgewandten Seite angeordnet. Die Federflügel 56a der Federelemente 32a sind auf der dem Klemmelementhaltekörper 36a abgewandten Seite angeordnet, insbesondere zumindest in axialer Richtung betrachtet. Die sich in axialer Richtung erstreckenden Reibflächen 38a sind in radialer Richtung betrachtet nach innen ausgerichtet.

Die Reibflächen 38a sind der Welle 50a zugewandt angeordnet. Die Reibflächen 38a sind der Rotationsachse 34a zugewandt angeordnet.

Das Kraftübertragungselement 42a weist vier Durchführungen 44a auf, durch welche jeweils eine Montagestruktur des Klemmelementhaltekörpers 36a zumindest teilweise in radialer Richtung nach außen geführt ist. Alternativ ist auch denkbar, dass das Kraftübertragungselement 42a eine Anzahl von Durchführungen 44a aufweist, die verschieden ist von vier, beispielsweise lediglich eine Durchführung 44a, zwei, drei oder mehr als vier Durchführungen 44a. Eine Anzahl an Durchführungen 44a entspricht insbesondere einer Anzahl von Reibelementen 66a, insbesondere Federelementen 32a. Es ist jedoch alternativ auch denkbar, dass die Anzahl an Durchführungen 44a verschieden ist von einer Anzahl an Reibelementen 66a, insbesondere Federelementen 32a.

Die Montagestruktur des Klemmelementhaltekörpers 36a ist hier beispielsweise als Aufnahme ausgebildet, welche eines der Federelemente 32a der Federeinheit 26a aufnimmt. Die Montagestruktur ist insbesondere durch Umspritzen des Federelements 32a gefertigt. Die Vorspanneinheit 112a und die Reibeinheit 24a sind an derselben Montagestruktur des Klemmelementhaltekörpers 36a angeordnet. Insbesondere sind an jeder Montagestruktur des Klemmelementhaltekörpers 36a je zumindest ein Federelement 32a der Reibeinheit 24a und ein Federelement 114a, 116a der Vorspanneinheit 112a angeordnet. Die Vorspanneinheit 112a umfasst vorzugsweise je Durchführung 44a zumindest ein, insbesondere genau ein, hier beispielhaft vier, Federelemente 114a, 116a, von denen hier zwei mit einem Bezugszeichen versehen wurden. Die Federelemente 114a, 116a der Vorspanneinheit 112a sind als Druckfeder ausgebildet. Die Federelemente 114a, 116a sind beispielhaft in den Durchführungen 44a angeordnet und stützen sich insbesondere an je einer die Durchführungen 44a in Umfangsrichtung begrenzenden Wandung ab. Die Federelemente 114a, 116a greifen den Klemmelementhaltekörper 36a in Umfangsrichtung vorzugsweise an je einer der Montagestrukturen an.

Ein Wert eines maximalen Durchmessers 46a der Wälzkörper 20a beträgt zwischen 6 % und 20 % von einem Wert eines maximalen Innendurchmessers 48a des Kraftübertragungselements 42a, insbesondere der Hülse 40a. Vorzugsweise beträgt ein Wert des maximalen Durchmessers 46a der Wälzkörper 20a maximal 15 %, besonders bevorzugt maximal 10 % von einem Wert des maximalen Innendurchmessers 48a des Kraftübertragungselements 42a, insbesondere der Hülse 40a. Alternativ ist jedoch auch denkbar, dass ein Wert des maximalen Durchmessers 46a der Wälzkörper 20a außerhalb eines Bereichs zwischen 6 % und 20 % von einem Wert des maximalen Innendurchmessers 48a des Kraftübertragungselements 42a, insbesondere der Hülse 40a, beträgt. Der Innendurchmesser 48a ist insbesondere in radialer Richtung gemessen. Vorzugsweise ist der maximale Durchmesser 46a in radialer Richtung gemessen. Ein Wert des maximalen Durchmessers 46a der Wälzkörper 20a beträgt zwischen 8 % und 25 % von einem Wert eines maximalen Durchmessers 52a der Welle 50a. Vorzugsweise beträgt ein Wert des maximalen Durchmessers 46a der Wälzkörper 20a maximal 15 %, besonders bevorzugt maximal 12 % von einem Wert des maximalen Durchmessers 52a der Welle 50a. Alternativ ist jedoch auch denkbar, dass ein Wert des maximalen Durchmessers 46a der Wälzkörper 20a außerhalb eines Bereichs zwischen 8 % und 25 % von einem Wert des maximalen Durchmessers 52a der Welle 50a beträgt. Insbesondere ist der maximale Durchmesser 52a der Welle 50a in radialer Richtung gemessen.

Ein Wert des maximalen Durchmessers 52a der Welle 50a beträgt beispielsweise maximal 38 mm, besonders bevorzugt beträgt ein Wert des maximalen Durchmessers 52a der Welle 50a 32 mm. Ein Wert des maximalen Innendurchmessers 48a des Kraftübertragungselements 42a, insbesondere der Hülse 40a, beträgt maximal 45 mm. Vorzugsweise beträgt ein Wert des maximalen Innendurchmessers 48a des Kraftübertragungselements 42a, insbesondere der Hülse 40a, zwischen 40 mm und 41 mm. Alternativ ist jedoch auch denkbar, dass ein Wert des maximalen Innendurchmessers 48a des Kraftübertragungselements 42a, insbesondere der Hülse 40a, größer ist als 45 mm. Ein Wert des maximalen Durchmessers 46a der Wälzkörper 20a beträgt maximal 5 mm. Vorzugsweise beträgt ein Wert des maximalen Durchmessers 46a der Wälzkörper 20a im Wesentlichen 3,5 mm. Alternativ ist jedoch auch denkbar, dass ein Wert des maximalen Durchmessers 46a der Wälzkörper 20a größer ist als 5 mm.

Ein jeweiliger maximaler Bewegungswinkel, insbesondere ein Translationswinkel, der Wälzkörper 20a relativ zu dem Klemmelementhaltekörper 36a um die Rotationsachse 34a des Freilaufs 16a beträgt maximal 1,5°. Bevorzugt beträgt der maximale Bewegungswinkel, insbesondere Translationswinkel, der Wälzkörper 20a relativ zu dem Klemmelementhaltekörper 36a zwischen 0° und 1°. Besonders bevorzugt beträgt der jeweilige maximale Bewegungswinkel, insbesondere Translationswinkel, der Wälzkörper 20a relativ zu dem Klemmelementhaltekörper 36a im Wesentlichen 0,5°. Alternativ ist jedoch auch denkbar, dass der jeweilige maximale Bewegungswinkel, insbesondere Translationswinkel, der Wälzkörper 20a relativ zu dem Klemmelementhaltekörper 36a um die Rotationsachse 34a größer ist als 1,5°.

Ein maximaler Winkel zwischen der jeweiligen Klemmposition der Wälzkörper 20a und einer jeweiligen maximalen Freidrehposition der Wälzkörper 20a um die Rotationsachse 34a des Freilaufs 16a beträgt maximal 5°. Vorzugsweise beträgt der maximale Winkel zwischen der jeweiligen Klemmposition der Wälzkörper 20a und der jeweiligen maximalen Freidrehposition der Wälzkörper 20a um die Rotationsachse 34a des Freilaufs 16a maximal 2,5°. Bevorzugt beträgt der maximale Winkel zwischen der jeweiligen Klemmposition der Wälzkörper 20a und der jeweiligen maximalen Freidrehposition der Wälzkörper 20a um die Rotationsachse 34a des Freilaufs 16a zwischen 0,3° und 2,5°, besonders bevorzugt zwischen 0,4° und 2°.Ganz besonders bevorzugt beträgt der maximale Winkel zwischen der jeweiligen Klemmposition der Wälzkörper 20a und der jeweiligen maximalen Freidrehposition der Wälzkörper 20a um die Rotationsachse 34a zumindest im Wesentlichen 0,8°. Die jeweilige maximale Freidrehposition und die jeweilige Klemmposition der Wälzkörper 20a befinden sich jeweils in einer der Ausnehmungen 90a für die Wälzkörper 20a. Die jeweilige maximale Freidrehposition und die Klemmposition befinden sich an einander entgegengesetzten Endbereichen der Ausnehmungen 90a. Die Klemmflächen 82a sind jeweils auf einer bezüglich der Vorwärtsdrehrichtung 78a hinteren Seite der Ausnehmungen 90a angeordnet. Die jeweilige Freidrehposition ist auf einer bezüglich der Vorwärtsdrehrichtung 78a vorderen Seite der Ausnehmungen 90a angeordnet. Die Ausnehmungen 90a weisen in dem jeweiligen Endbereich, in dem sich insbesondere die Freidrehposition des jeweiligen Wälzkörpers 20a befindet, einen Anschlag für den jeweiligen Wälzkörper 20a auf. Alternativ ist auch denkbar, dass der maximale Winkel zwischen der jeweiligen Klemmposition und der jeweiligen maximalen Freidrehposition der Wälzkörper 20a um die Rotationsachse 34a des Freilaufs 16a größer ist als 5°. Die Wälzkörper 20a befinden sich jeweils in der maximalen Freidrehposition, wenn die Wälzkörper 20a an dem jeweiligen Anschlag der Ausnehmungen 90a anliegen.

Die Klemmelementeinheit 18a und das Kraftübertragungselement 42a weisen eine gemeinsame Schnittebene auf, welche zumindest im Wesentlichen senkrecht zu der Rotationsachse 34a verläuft. Die Klemmelementeinheit 18a ist zumindest im Wesentlichen vollständig innerhalb des Kraftübertragungselements 42a angeordnet. Alternativ ist auch denkbar, dass die Klemmelementeinheit 18a in axialer Richtung derart versetzt zu dem Kraftübertragungselement 42a angeordnet ist, dass zumindest die Außenverzahnung des Kraftübertragungselements 42a und die Klemmelementeinheit 18a frei von einer gemeinsamen Schnittebene sind, welche zumindest im Wesentlichen senkrecht zur Rotationsachse 34a verläuft.

Eine Summe aus einem Käfigwinkel und einem Federwinkel ist kleiner als ein Hülsenfreiwinkel oder gleich dem Hülsenfreiwinkel. Der Klemmelementhaltekörperwinkel ist durch eine Summe von einem Klemmelementhaltekörperfreiwinkel und einem Klemmelementhaltekörperbelastungswinkel gebildet. Der Klemmelementhaltekörperwinkel beträgt maximal 2,5°. Besonders bevorzugt beträgt der Klemmelementhaltekörperwinkel im Wesentlichen 1,8°. Alternativ ist jedoch auch denkbar, dass der Klemmelementhaltekörperwinkel größer ist als 2,5°. Der Klemmelementhaltekörperfreiwinkel entspricht dem jeweiligen maximalen Bewegungswinkel, insbesondere Translationswinkel, der Wälzkörper 20a relativ zum Klemmelementhaltekörper 36a um die Rotationsachse 34a des Freilaufs 16a. Der Klemmelementhaltekörperbelastungswinkel ist eine Summe aus einem mechanischen Klemmelementhaltekörperbelastungswinkel und einem chemischen und/oder thermischen Klemmelementhaltekörperbelastungswinkel. Der Klemmelementhaltekörperbelastungswinkel beträgt maximal 1°. Besonders bevorzugt beträgt der Klemmelementhaltekörperbelastungswinkel im Wesentlichen 0,8°. Alternativ ist jedoch auch denkbar, dass der Klemmelementhaltekörperbelastungswinkel größer ist als 1°. Der mechanische Klemmelementhaltekörperbelastungswinkel ist insbesondere abhängig von möglichen mechanischen Deformationen bezüglich des Klemmelementhaltekörpers 36a im Betrieb der Klemmelementeinheit 18a. Der mechanische Klemmelementhaltekörperbelastungswinkel beträgt maximal 0,7°. Besonders bevorzugt beträgt der mechanische Klemmelementhaltekörperbelastungswinkel im Wesentlichen 0,5°. Alternativ ist jedoch auch denkbar, dass ein Wert des mechanischen Klemmelementhaltekörperbelastungswinkels größer ist als 0,7°. Der chemische und/oder thermische Klemmelementhaltekörperbelastungswinkel ist insbesondere abhängig vom Klemmelementhaltekörper 36a bezüglich einer möglichen thermischen Ausdehnung, eines möglichen Aufquellens des Materials, beispielsweise durch Feuchtigkeitsaufnahme, oder dergleichen. Der chemische und/oder thermische Klemmelementhaltekörperbelastungswinkel beträgt maximal 0,5°. Besonders bevorzugt beträgt der chemische und/oder thermische Klemmelementhaltekörperbelastungswinkel im Wesentlichen 0,3°. Alternativ ist jedoch auch denkbar, dass ein Wert des chemischen und/oder thermischen Klemmelementhaltekörperbelastungswinkels größer ist als 0,5°.

Der Hülsenfreiwinkel entspricht vorzugsweise dem jeweiligen maximalen Winkel zwischen der jeweiligen Klemmposition der Wälzkörper 20a und der jeweiligen maximalen Freidrehposition der Wälzkörper 20a. Eine Summe aus dem Hülsenfreiwinkel und einem Hülsenbelastungswinkel ergibt insbesondere einen Hülsenwinkel. Der Hülsenwinkel beträgt maximal 6,5°, bevorzugt maximal 3,5°. Besonders bevorzugt beträgt der Hülsenwinkel im Wesentlichen 3,3°. Alternativ ist jedoch auch denkbar, dass der Hülsenwinkel größer ist als 6,5°. Der Hülsenbelastungswinkel ist vorzugsweise zumindest abhängig von einer möglichen Verformung und/oder Aufdehnung des Kraftübertragungselements 42a, insbesondere der Hülse 40a, vorzugsweise der Klemmflächen 82a, im Betrieb der Klemmelementeinheit 18a. Der Hülsenbelastungswinkel beträgt maximal 4°, bevorzugt maximal 2°. Ganz besonders bevorzugt beträgt der Hülsenbelastungswinkel zumindest im Wesentlichen 2,5°. Alternativ ist jedoch auch denkbar, dass der Hülsenbelastungswinkel einen Wert aufweist, der größer ist als 4°. Der Federwinkel ist insbesondere eine Summe aus einem Federfreiwinkel und einem Federbelastungswinkel. Der Federwinkel beträgt maximal 0,1°. Besonders bevorzugt beträgt der Federwinkel im Wesentlichen 0,05°. Alternativ ist jedoch auch denkbar, dass der Federwinkel größer ist als 0,1°. Der Federfreiwinkel bezieht sich insbesondere auf ein mögliches Spiel in der Verbindung zwischen dem Klemmelementhaltekörper 36a und der Federeinheit 26a, insbesondere den Federelementen 32a. Der Federbelastungswinkel ist insbesondere abhängig von einer möglichen Verbiegung der jeweiligen Federelemente 32a. Der Federbelastungswinkel beträgt vorzugsweise maximal 0,1°. Besonders bevorzugt beträgt der Federbelastungswinkel im Wesentlichen 0,05°. Alternativ ist jedoch auch denkbar, dass der Federbelastungswinkel größer ist als 1°. Ein Freilauffunktionswinkel ist insbesondere eine Summe aus dem Hülsenwinkel, dem Klemmelementhaltekörperwinkel und dem Federwinkel.

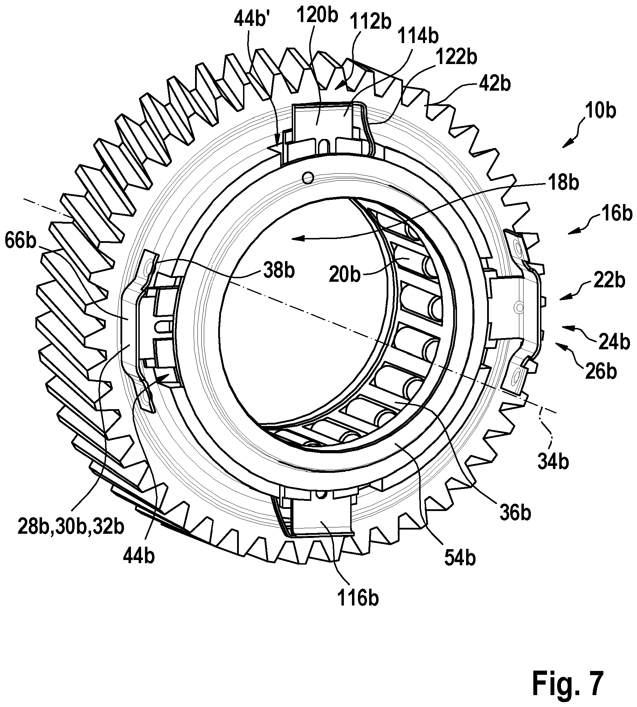

In der Figur 7 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 6, verwiesen werden kann. Zur Unterscheidung der Ausführungsbeispiele ist der Buchstabe a den Bezugszeichen des Ausführungsbeispiels in den Figuren 1 bis 6 nachgestellt. In den Ausführungsbeispiel der Figur 7 ist der Buchstabe a durch die Buchstaben b ersetzt.

Figur 7 zeigt eine Antriebsvorrichtung 10b für eine Antriebseinheit (hier nicht dargestellt) eines Elektrofahrrads (hier nicht dargestellt). Die Antriebsvorrichtung 10b weist einen bidirektionalen Freilauf 16b auf. Der Freilauf 16b weist zumindest eine Klemmelementeinheit 18b auf. Die Klemmelementeinheit 18b umfasst zumindest eine mechanische Steuereinheit 22b. Die Steuereinheit 22b weist zumindest eine Reibeinheit 24b auf, die zu einer Erzeugung einer Stellkraft vorgesehen ist. Die Reibeinheit 24b weist zumindest eine Federeinheit 26b auf. Der Freilauf 16b weist zumindest einen Reibkörper 94b auf. Die Antriebsvorrichtung 10b umfasst zumindest ein Kraftübertragungselement 42b zur Übertragung einer Antriebskraft der Antriebseinheit. Die Federeinheit 26b umfasst zumindest ein Federelement 32b, das an einer Montagestruktur eines Klemmelementhaltekörpers 36b der Klemmelementeinheit 18b befestigt ist, welche in eine Durchführung 44b des Kraftübertragungselements 42b hineinragt, insbesondere durch diese hindurchragt.

Die Klemmelementeinheit 18b umfasst zumindest eine Vorspanneinheit 112b, die zu einer Erzeugung einer Vorspannkraft vorgesehen ist. Die Vorspanneinheit 112b umfasst zumindest ein Federelement 114b, 116b, welches als Blechfeder ausgebildet ist. Die zumindest eine Blechfeder ist vorzugsweise an einer weiteren Montagestruktur des Klemmelementhaltekörpers 36b angeordnet, die in eine weitere Durchführung 44b' des Kraftübertragungselements 42b hineinragt, insbesondere durch diese hindurchragt. Die Blechfeder umfasst vorzugsweise einen Stützkörper 120b und ein Federblatt 122b. Der Stützkörper 120b ist vorzugsweise an der weiteren Montagestruktur befestigt. Der Stützkörper 120b ist vorzugsweise analog zu einem Stützkörper des Federelements 32b ausgebildet, insbesondere mit Verbindungselementen, wie dies in Figur 6 dargestellt ist (vgl. Verbindungselemente 106a der Fig. 6). Das Federblatt 122b erstreckt sich vorzugsweise ausgehend von einem dem Klemmelementhaltekörper 36b abgewandten Ende durch die weitere Durchführung 44b' hindurch in Richtung des Klemmelementhaltekörpers 36b. Eine Abknickung des Federblatts 120b ist vorzugsweise dazu vorgesehen, in zumindest einem Betriebszustand der Antriebsvorrichtung 10b an einer die weitere Durchführung 44b' begrenzenden Wandung des Kraftübertragungselements 42b anzustoßen.

An der weiteren Montagestruktur, an welcher die Blechfeder befestigt ist, ist vorzugsweise kein Federelement der Reibeinheit 24b angeordnet. Der Klemmelementhaltekörper 36b umfasst vorzugsweise mehrere, hier beispielsweise vier, Montagestrukturen, welche jeweils entweder mit einem der Federelemente 32b der Reibeinheit 24b oder mit einer der Blechfedern der Vorspanneinheit 112b bestückt sind. Die Anzahl der Blechfedern und der Federelemente 32b der Reibeinheit 24b können, wie hier dargestellt mit jeweils zwei Exemplaren, gleich groß sein oder unterschiedlich sein, beispielsweise im Verhältnis 3:1 oder 1:3. Eine Verteilung der Federelemente 32b und der Blechfedern kann drehsymmetrisch bezüglich einer Rotationsachse 34b der Antriebsvorrichtung 10b oder unregelmäßig sein. Die Vorspanneinheit 112b kann zusätzlich zu den Blechfedern Druckfedern aufweisen, die an der Montagestruktur angreifen, an welcher die Federelemente 32b der Reibeinheit 24b befestigt sind.

## Patentansprüche

1. Antriebsvorrichtung (10a; 10b) für eine Antriebseinheit (12a; 12b) eines Elektrofahrrads (14a; 14b), mit einem bidirektionalen Freilauf (16a; 16b), wobei der Freilauf (16a; 16b) zumindest eine Klemmelementeinheit (18a; 18b) umfasst, **dadurch gekennzeichnet, dass** die Klemmelementeinheit (18a; 18b) zumindest eine Vorspanneinheit (112a; 112b), die zu einer Erzeugung einer Vorspannkraft vorgesehen ist, umfasst.

2. Antriebsvorrichtung (10a; 10b) nach Anspruch 1 **dadurch gekennzeichnet, dass** die Klemmelementeinheit (18a; 18b) zumindest eine mechanische Steuereinheit (22a; 22b) umfasst, wobei die Steuereinheit (22a; 22b) eine Reibeinheit (24a; 24b), die zu einer Erzeugung einer Stellkraft vorgesehen ist, umfasst und wobei die Steuereinheit (22a; 22b) die zumindest eine Vorspanneinheit (112a; 112b) umfasst.

3. Antriebsvorrichtung (10a; 10b) nach Anspruch 2, **dadurch gekennzeichnet, dass** die Reibeinheit (24a; 24b) und die Vorspanneinheit (112a; 112b) derart angeordnet sind, dass eine Stellrichtung der Reibeinheit (24a; 24b) und eine Wirkrichtung der Vorspannkraft vorzugsweise quer, insbesondere zumindest im Wesentlichen senkrecht, zueinander ausgerichtet sind.

4. Antriebsvorrichtung (10a; 10b) nach einem der vorhergehenden Ansprüchen, **dadurch gekennzeichnet, dass** die Vorspanneinheit (112a; 112b) zumindest ein Federelement (114a, 116a; 114b, 116b) aufweist.

5. Antriebsvorrichtung (10a) nach Anspruch 4, **dadurch gekennzeichnet, dass** das zumindest eine Federelement (114a, 116a) als Druckfeder ausgebildet ist.

6. Antriebsvorrichtung (10b) nach Anspruch 4 oder 5, **dadurch gekennzeichnet, dass** das zumindest eine Federelement (114b, 116b) oder ein weiteres Federelement der Vorspanneinheit (112b) als Blechfeder ausgebildet ist.

7. Antriebsvorrichtung (10a) nach einem der Ansprüche 2 bis 6, **dadurch gekennzeichnet, dass** die Vorspanneinheit (112a) und die Reibeinheit (24a) an demselben Aufnahmebereich (92a) eines Klemmelementhaltekörpers (36a) der Steuereinheit (22a) angeordnet sind.

8. Antriebsvorrichtung (10b) nach einem der Ansprüche 2 bis 6, **dadurch gekennzeichnet, dass** die Vorspanneinheit (112b) und die Reibeinheit (24b) an unterschiedlichen Aufnahmebereichen (92b) eines Klemmelementhaltekörpers (36b) der Steuereinheit (22b) angeordnet sind.

9. Antriebseinheit (12a; 12b) für ein Elektrofahrrad (14a; 14b) mit einer Antriebsvorrichtung (10a; 10b) nach einem der vorhergehenden Ansprüche.

10. Elektrofahrrad (14a; 14b) mit einer Antriebseinheit (12a; 12b) nach Anspruch 9.
